(19) Europäisches Patentamt / European Patent Office / Office européen des brevets

(11) **EP 4 396 774 B1**

(12) **EUROPEAN PATENT SPECIFICATION**

(45) Date of publication and mention
of the grant of the patent:
**28.05.2025 Bulletin 2025/22**

(51) International Patent Classification (IPC):
**G06T 7/11** (2017.01)　　**G06T 7/55** (2017.01)
**G06T 19/20** (2011.01)

(21) Application number: **22792865.2**

(22) Date of filing: **02.09.2022**

(52) Cooperative Patent Classification (CPC):
**G06T 19/20; G06T 7/11; G06T 7/55; G06V 20/58;
G06V 20/647;** G06T 2207/10024; G06T 2207/10028

(86) International application number:
**PCT/GB2022/052246**

(87) International publication number:
**WO 2023/031620 (09.03.2023 Gazette 2023/10)**

(54) **INCREMENTAL DENSE 3-D MAPPING WITH SEMANTICS**

INKREMENTELLE DICHTE 3D-ABBILDUNG MIT SEMANTIK

CARTOGRAPHIE 3-D DENSE INCRÉMENTALE AVEC SÉMANTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.09.2021 GB 202112542**

(43) Date of publication of application:
**10.07.2024 Bulletin 2024/28**

(73) Proprietor: **Slamcore Limited
Rutland LE15 7WD (GB)**

(72) Inventors:
• **VAKHITOV, Alexander
London Greater London SE1 1JA (GB)**
• **TARRIO, Juan J.
London Greater London SE1 1JA (GB)**
• **WOODLEY, Tom
London Greater London SE1 1JA (GB)**
• **ALCANTARILLA, Pablo F.
London Greater London SE1 1JA (GB)**

(74) Representative: **Elkington and Fife LLP
Prospect House
8 Pembroke Road
Sevenoaks, Kent TN13 1XR (GB)**

(56) References cited:
• **TATENO KEISUKE ET AL: "When 2.5D is not
enough: Simultaneous reconstruction,
segmentation and recognition on dense SLAM",
2016 IEEE INTERNATIONAL CONFERENCE ON
ROBOTICS AND AUTOMATION (ICRA), IEEE, 16
May 2016 (2016-05-16), pages 2295 - 2302,
XP032908448, DOI: 10.1109/ICRA.2016.7487378**
• **JORG STUCKLER ET AL: "Semantic mapping
using object-class segmentation of RGB-D
images", INTELLIGENT ROBOTS AND SYSTEMS
(IROS), 2012 IEEE/RSJ INTERNATIONAL
CONFERENCE ON, IEEE, 7 October 2012
(2012-10-07), pages 3005 - 3010, XP032287829,
ISBN: 978-1-4673-1737-5, DOI: 10.1109/
IROS.2012.6385983**
• **VINEET VIBHAV ET AL: "Incremental dense
semantic stereo fusion for large-scale semantic
scene reconstruction", 2015 IEEE
INTERNATIONAL CONFERENCE ON ROBOTICS
AND AUTOMATION (ICRA), IEEE, 26 May 2015
(2015-05-26), pages 75 - 82, XP033168394, DOI:
10.1109/ICRA.2015.7138983**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **HO BING-JUI ET AL: "Virtual Occupancy Grid Map for Submap-based Pose Graph SLAM and Planning in 3D Environments", 2018 IEEE/RSJ INTERNATIONAL CONFERENCE ON INTELLIGENT ROBOTS AND SYSTEMS (IROS), IEEE, October 2018 (2018-10-01), pages 2175 - 2182, XP033491506, DOI: 10.1109/ IROS.2018.8594234**

**Description**

FIELD OF THE INVENTION

This invention relates to 3-D mapping, meaning the creation and/or updating of a 3-D map of an environment, wherein the map includes semantic information. It relates in particular to the incremental creation/updating of a 3-D map with semantics, in the context of a visual-inertial simultaneous localisation and mapping (VI-SLAM) system, in which visual data and inertial measurements are combined to produce pose estimates of a mobile device as it moves around an environment.

BACKGROUND OF THE INVENTION

Interest in autonomous and semi-autonomous robots and vehicles, such as drones, is growing as the technology matures and they become increasingly widely used.

Trajectory planning, for robots or autonomous vehicles, requires a map representation that captures information about which parts of an environment are occupied (e.g. by solid objects) and which parts are free space. It is also desirable for the map to capture information about which parts of the environment remain unexplored - that is, parts where the occupancy is currently unknown. The vehicle or robot needs to be able to determine a safe travel path that will avoid collisions. In general, this is a 3-D problem - a 2-D map of the environment is not enough in most cases. This may be either because the robot or vehicle is capable of motion in three dimensions, or - even if the vehicle/robot does not move in three dimensions - simply because it has a finite size in three-dimensions, as do the obstacles in the environment. This implies a need for a dense, volumetric map, capable of accurately representing all parts of the environment. Two examples of such a dense map are a 3-D occupancy map, and a surface based representation, such as a truncated signed distance function (TSDF).

In the context of drones, applications of interest may include aerial surveillance, infrastructure inspection, and search and rescue. In the context of robotics, applications may include close inspection and grasping of objects.

Similar considerations arise in modern augmented/mixed reality (AR/MR) systems. Dense maps are also desirable for realistic rendering in such systems.

Dense mapping can be contrasted with semi-dense approaches - for example, surfel- or point-cloud-based representations. These are less desirable for trajectory planning, in the context of robotics, and for rendering, in the context of AR/MR.

It is also desirable that the dense map should scale to large environments. For example, building-scale maps are required for warehouse robotics.

As a further goal, annotation of every occupied point of a map with a semantic class (semantic map segmentation) would be helpful in a variety of applications. For example, a robotic vacuum cleaner could activate different programs for a carpet and a wooden floor, while an AR/MR system could estimate material properties for better rendering depending on the semantic class of a surface.

In many applications, an additional level of semantic detail would be advantageous in the segmentation - for countable objects, it would be beneficial to distinguish between different instances of the same class of object. This could allow a robot in a warehouse to count the total number of items stored, for example, as well as supporting the robot to manipulate selected individual objects. Identifying separate instances of a "person" class could help a robot to track and avoid people as they move around the environment. Likewise, in an AR/MR system, it may be desirable to automatically identify and extract individual objects from the environment, to allow them to be shared, modified/augmented, or replaced virtually.

For greater autonomy, it may be desirable for the robot or vehicle to be able to create and update the semantic 3-D map of the environment by itself, as far as possible, without a constant need for external communications or additional processing resources. It is therefore desirable that the techniques used to build and maintain the map should be computationally tractable on embedded processing resources.

To date, little research has focused on techniques for dense 3-D semantic mapping suitable for embedded implementation.

The paper "When 2.5D is not enough: Simultaneous reconstruction, segmentation and recognition on dense SLAM" by Tateno et al. published in the proceedings of the 2016 IEEE INTERNATIONAL CONFERENCE ON ROBOTICS AND AUTOMATION (ICRA) discloses a technique to incrementally segment a depth map.

SUMMARY OF THE INVENTION

The invention is defined by the claims.

A computer-implemented method for incremental dense mapping with semantics in 3-D, is provided. The method comprises obtaining a 2-D image of the 3-D environment, along with an associated depth map. Pose information is obtained, which relates the viewpoint of the 2-D image and depth map to the reference frame of an existing 3-D semantic map. In some examples, segments are projected into the 2-D image and associated with pixels, to generate a class label image containing semantic class labels and a segment ID image containing segment IDs. In some examples, the existing 3-D map is sampled at the 3-D points corresponding to the pixels in the depth map, to retrieve a class label image containing semantic class labels and a segment ID image containing segment IDs. Geometric segmentation of the depth map is performed, taking into account the segment ID image extracted from the existing 3-D map. The 2-D image is also segmented, taking into account the class label image extracted from the existing 3-D map. The segment IDs and semantic class labels in the 3-D map are updated based on the results of the geometric segmentation and the segmentation of the 2-D image.

According to a first aspect, there is provided a computer-implemented method for updating a 3-D map of a 3-D environment, the 3-D map comprising a plurality of voxels, wherein at least some voxels comprise a semantic class label,

the 3-D map further comprising a segment database storing, for each of a plurality of segments, a segment ID, 3-D spatial information of the segment, and a semantic class label for the segment,
the method comprising:

obtaining the 3-D map;
obtaining a 2-D image of the 3-D environment, and an associated depth map, each comprising a plurality of pixels;
obtaining a pose associated with the 2-D image and the depth map;
projecting the segments into the 2-D image, based on the 3-D spatial information of each segment and the pose, and associating the pixels with respective segments, to generate a class label image containing semantic class labels and a segment ID image containing segment IDs;
performing geometric segmentation of the depth map, wherein the geometric segmentation is based on the segment ID image and determines an updated segment ID image;
performing semantic or panoptic segmentation of the 2-D image, wherein the segmentation is based on the class label image and determines an updated semantic class label for each segment in the updated segment ID image;
updating the segment IDs of one or more segments based on the updated segment ID image;
updating the semantic class labels of one or more segments, based on the updated semantic class labels; and
updating the semantic class labels of one or more voxels based on the updated semantic class labels.

The 3-D spatial information may comprise: a 3-D position of the segment and a 3-D covariance of the segment. The 3-D spatial information may define the position of the segment as an ellipse in three dimensions.

The semantic class label for each pixel may be based on the class label of the segment with which the pixel is associated.

Associating the pixels with respective segments may comprise, for each pixel: comparing the pixel with each segment whose projection overlaps the pixel, using a cost function; and associating the pixel with the segment for which the cost function has the lowest value.

The comparing optionally comprises back-projecting the pixel to a point in 3-D space, based on the depth map, and comparing the back-projected point with each said segment.

The cost function may be based on one or both of: a difference between the 3-D position of the back-projected point and the position of the segment; and a difference between a normal vector of the segment and a normal vector associated with the pixel.

The difference between the position of the pixel and the position of the projected segment may be based on a Mahalanobis distance. That is, the difference in position may be scaled by the inverse of the covariance matrix of the segment. The normal vector of the segment may be based on the 3-D covariance of the segment. The normal vector of the pixel may be based on the depth map.

Responsive to the minimum value of the cost function (over all of said segments) exceeding a predetermined cost threshold, the method may comprise initialising a new segment. That is, if none of the existing segments is a good match for the pixel, the method assumes that the pixel is associated with a previously unseen segment.

According to a second aspect there is provided a computer-implemented method for updating a 3-D map of a 3-D environment, the 3-D map comprising a plurality of voxels, wherein each voxel comprises a segment ID, and at least some voxels further comprise a semantic class label,

wherein the segment ID identifies a segment to which the voxel belongs, wherein each segment comprises a group of one or more voxels,
the 3-D map further comprising a segment database storing, for each segment, the respective segment ID and a semantic class label for the segment,

the method comprising:

> obtaining the 3-D map;
> obtaining a 2-D image of the 3-D environment, and an associated depth map, each comprising a plurality of pixels;
> obtaining a pose associated with the 2-D image and the depth map;
> sampling the 3-D map at the 3-D points corresponding to the plurality of pixels, based on the depth map and the pose, to generate a class label image containing semantic class labels and a segment ID image containing segment IDs;
> performing geometric segmentation of the depth map, wherein the geometric segmentation is based on the segment ID image and determines an updated segment ID image;
> performing semantic or panoptic segmentation of the 2-D image, wherein the segmentation is based on the class label image and determines an updated semantic class label for each segment in the updated segment ID image;
> updating the segment IDs of one or more voxels based on the updated segment ID image;
> updating the semantic class labels of one or more segments in the segment database, based on the updated semantic class labels; and
> updating the semantic class labels of one or more voxels based on the updated semantic class labels.

In examples of both aspects, a dense 3-D map of the environment can be incrementally segmented, based on a newly obtained 2-D image and depth map (for example, provided as an RGB-D frame). The optional features summarised below are, in general, applicable to both aspects.

For voxels (and pixels of the segment ID image) which have not yet been assigned a valid segment ID, the segment ID may take a null value (for example, 0).

The semantic class label describes a semantic role with which physical matter present in the voxel can be associated. For example, it may identify that the physical matter in the voxel is associated with a person or with an object, and may identify a type of material of the object.

The voxels in a given segment may have the same semantic class label.

The segmentation of the 2-D image may comprise semantic segmentation or panoptic segmentation. In the case of semantic segmentation, the segmentation may optionally further comprise a step of object detection or instance segmentation.

When the segmentation comprises panoptic segmentation, or semantic segmentation with object detection, the segment database may additionally store an instance label for each segment.

Each segment may comprise a spatially bounded group of voxels. Here, "spatially bounded" means that the spatial extent of the segment in 3-D space is restricted in some way. For example, membership of a segment may be restricted such that the variance in the spatial position of the member voxels about their mean position does not exceed an upper limit.

The method optionally further comprises processing the depth map to extract surface orientation vectors. The geometric segmentation may be based at least in part on the surface orientation vectors.

The geometric segmentation may be configured to generate segments that are approximately planar, based on the surface orientation vectors. The surface orientation vectors may be normal vectors.

The geometric segmentation may be performed by a graph segmentation algorithm on a weighted graph comprising vertices, and edges connecting the vertices, each edge having an associated weight.

The inventors have found that graph segmentation offers an efficient and effective approach for incremental segmentation in the present context. The graph representation allows existing segmented regions to be represented as segments, and regions not yet segmented to be represented as pixels. Both pixels and segments can be handled seamlessly in the graph representation.

Optionally: for each pixel that does not have a valid segment ID, a vertex may be created for that single pixel in the graph; for pixels that have a valid segment ID, a single vertex may be created for all pixels having the same segment ID; and/or each vertex may be connected to its four immediate neighbours by an edge.

In other words, each segment corresponds to a vertex in the graph, and pixels that have not yet been assigned a valid segment ID are treated as separate individual segments.

The graph segmentation algorithm may comprise merging vertices based on the weight of the respective connecting edges.

The weights may be based at least in part on surface orientation vectors of the segments, extracted from the depth map. Alternatively or in addition, the weights may be based at least in part on the spatial positions and/or colours of the segments. In some examples, the merging may be based exclusively on the surface orientation vectors (for example, surface normals) and spatial positions. This has been found to enable good robustness to lighting and viewpoint changes.

The segmentation of the 2-D image may comprise using a machine-learning algorithm to infer a proposed class label for each pixel in the 2-D image

The machine-learning algorithm may comprise a neural network, for example. Machine-learning techniques can offer a powerful approach for segmentation. However, they can be computationally intensive. By applying the machine learning algorithm to the 2-D image, the present method can avoid the need for even more complex inference using machine learning in 3-D. The results of the 2-D inference using the machine learning algorithm can be combined with the 3-D information already present in the 3-D map, to make the best use of both sources of information.

The segmentation of the 2-D image may comprise, for each pixel, combining the semantic label from the class label image with the respective proposed class label, to produce an updated pixel class label.

The semantic label from the class label image is also referred to herein as a "prior" annotation. The proposed class label, generated by the machine learning algorithm is also referred to herein as an "observation". The updated pixel class label is also referred to herein as a "posterior" semantic annotation.

Determining the updated semantic class label for each segment optionally comprises majority voting of the updated pixel class labels within that segment. This offers a simple but reliable way to derive segment class labels from per-pixel labels. The pixels belonging to a segment can be identified as those having the relevant segment ID in the segment ID image.

Each semantic class label may be associated with a confidence. The confidence may comprise a scalar value indicating a degree of confidence in the current class label, or a vector of per-class confidences. The confidence value may be useful for updating the semantic class of pixels and/or voxels, for example.

The method may further comprise: performing instance segmentation of the 2-D image, to produce a frame-level instance label for each pixel; obtaining a persistent instance label, based on instance segmentation of one or more previous 2-D images; comparing the frame-level instance labels with the persistent instance labels; and identifying a correspondence between the frame-level instance labels and the persistent instance labels, based on a result of the comparing.

The comparing may comprise counting the number of pixels for which each frame-level instance label co-occurs with each persistent instance label. Identifying the correspondence may comprise a greedy algorithm, wherein a correspondence is identified between the frame-level instance label and the persistent instance label with the highest number of co-occurrences.

If no correspondence is identified for one of the frame-level instance labels, the method may comprise creating a new persistent instance label for the object-instance associated with that frame-level instance label.

The method may further comprise performing segment-based object-instance extraction, optionally comprising merging the segments associated with two or more segment IDs into an object instance, based on a similarity metric defined between the segments.

The similarity metric between two segments may be based at least in part on the mean position of the two segments. This favours producing spatially compact object instances. Alternatively, or in addition, it may be based on one or more extremal points of the two segments. The extremal points may comprise or consist of four points on the boundary of each segment. The extremal points may be defined by a covariance matrix of the segment. The similarity metric between two segments may be based at least in part on the distance between nearest neighbouring extremal points of the two segments.

The similarity metric between two segments may be based at least in part on the covariance for the position of the two segments. Weighting the similarity metric according to the covariance may be beneficial in particular because quasi-planar segments produced using depth-based geometric segmentation according to embodiments of the present disclosure do not extend equally in all spatial directions - they may have more eccentric shapes.

The similarity metric between two segments may be based at least in part on a semantic similarity. The semantic similarity may be based on at least one of: an instance-based segmentation (for example, panoptic segmentation) of the 2-D image; and the results of object detection in the 2-D image. The object detection may produce a plurality of bounding boxes, and the semantic similarity may be based on overlap between the segments and the bounding boxes.

The merging of segments may be performed by a graph segmentation algorithm. Graph segmentation has been found to be a particularly flexible, efficient and effective way of implementing the merging of segments into object instances. The graph segmentation may comprise defining a weighted graph, in which each vertex corresponds to a segment and segments within a given spatial neighbourhood are linked by weighted edges. The weights may be based on the similarity metric between segments. In some examples, the merging of segments may be performed according to Hungarian method (which can itself be expressed as a graph segmentation algorithm).

In some examples, the merging of segments may be performed by a greedy algorithm, which proceeds iteratively, merging the two most similar segments at each iteration.

The method may comprise: performing instance segmentation of the 2-D image, to produce a frame-level instance label for each pixel; and when merging segments, prohibiting the merging of any segments that are present in any single 2-D image with different frame-level instance labels.

This can help to avoid inadvertently merging different instances of the same class of object - for example, two chairs side by side.

The method may further comprise extracting a bounding box defining a spatial extent of the object instance. The extraction of a bounding box may be used to support extraction of a mesh associated with the object in the bounding box, or to count objects of a particular semantic class, for example.

Obtaining the pose optionally comprises estimating the pose using a visual-inertial SLAM algorithm or visual-inertial localisation algorithm. A visual-inertial SLAM algorithm performs simultaneous localisation and mapping. A visual-inertial localisation algorithm may perform localisation within an existing 3-D map - for example, a 3-D map generated previously by a SLAM algorithm.

The 3-D map may be a 3-D occupancy map of occupied and unoccupied spaces in the 3-D environment, wherein each voxel optionally comprises an indication of occupancy.

The indication of occupancy may comprises a log-odds probability of occupation, for example.

Alternatively, the 3-D map may comprise a truncated signed distance function (TSDF) representation, wherein each voxel comprises a distance to the nearest surface in the 3-D environment.

The voxels may be arranged in the 3-D map in an octree structure. This can facilitate efficient storage of the 3-D map. The octree may be generated by subdividing a voxel into 8 smaller voxels if less than a predetermined portion of the voxel is occupied. This can provide the octree with higher resolution near to the boundaries between objects and free space. Meanwhile, voxels that are uniformly occupied or unoccupied can remain large, helping to reduce the amount of data to be stored.

The 3-D occupancy map may comprise a plurality of sub-maps, each sub-map describing a different volumetric region of the 3-D environment, each sub-map having associated with it a sub-map pose defining a position and orientation of the respective volumetric region within the 3-D occupancy map.

The volumetric regions may overlap with one another.

The method may further comprise updating one or more of the sub-map poses. Updated pose information may be provided by a visual inertial SLAM system, for example. Sub-map poses may be updated as a result of bundle adjustment, or loop closure detection, for example.

The method may further comprise updating one or more of the object instances after updating the sub-map poses. For example, following a sub-map pose update (for example, as a result of loop closure), it may be determined that two or more object instances that were identified previously are in fact manifestations of the same object in the real world. The updating may comprise merging the two or more previously identified object instances into one object instance in the 3-D map.

In some examples, the method may comprise, responsive to updating the one or more sub-map poses, performing segment-based object-instance extraction, comprising merging the segments associated with two or more segment IDs into an object instance, based on a similarity metric defined between the segments.

According to such examples, the instance extraction may be repeated after (that is, in response to) an update of the sub-map pose(s). This can help to avoid potentially duplicated object instances. The instance extraction algorithm may be able to identify the (previously) duplicated instances as actually belonging to the same object instance, based on an improved sub-map pose estimate.

Each sub-map may comprise occupancy information. In particular, each sub-map may contain occupancy indications for a plurality of voxels. Each occupancy indication may indicate a likelihood that the respective voxel is occupied or unoccupied. Updating the at least one sub-map based on the 2-D image and depth map and associated pose estimate may comprise updating the occupancy information - in particular, updating the occupancy indications - based on the 2-D image and depth map and associated pose estimate.

The method may further comprise: obtaining updated pose information; and in response, updating one or more of the sub-map poses, based on the received updated pose information.

In this way, the method can enable the relative positions and orientations of the different sub-maps to be adjusted, when updated information (in particular, pose information) becomes available. Neighbouring sub-maps within the 3-D occupancy map overlap one another, in order to support their reconfiguration in response to the updated pose information. The overlap ensures that small changes in the position and/or orientation of one volumetric region, relative to its neighbours, will not result in any gaps in the 3-D occupancy map.

The updated pose information may be received from a visual-inertial simultaneous localisation and mapping (VI-SLAM) system, or a visual-inertial localisation system.

Each sub-map may contain a rigid model describing the occupancy of space within its respective volumetric region. The sub-maps are effectively coupled to one another non-rigidly, in an articulated manner, by means of the sub-map poses. By describing the occupancy of space with several rigid models (each associated with a respective sub-map), instead of a single global rigid model, the present method helps avoid the need to update the entire 3-D occupancy map in response to updated pose information that affects just one part of the map. Instead, only the affected sub-map(s) need be updated, along with the associated sub-map pose(s).

Receiving the updated pose information may comprise obtaining updated pose estimates for one or more frames, and the method may comprise updating one or more of the sub-map poses based on the updated pose estimates.

In this way, the sub-maps are effectively anchored to the poses of the frames that were used to create them.

Each sub-map may comprise an octree for storing occupancy information, each octree comprising a hierarchy of nodes, each node being associated with a voxel, wherein each leaf node of the octree includes an occupancy indication.

The occupancy indication may indicate a likelihood that the respective voxel is occupied or unoccupied. The set of occupancy indications may define a scalar field indicating the probability of occupation of each voxel. The occupancy indication may comprise a log-odds probability.

Optionally, in some embodiments, non-leaf nodes may also include occupancy information.

Optionally, in some embodiments, the octree may store confidence information. For example, in addition to an occupancy indication, each leaf node of the octree may include a confidence indication, which indicates a confidence that the occupancy indication is correct.

The use of the octree may help to reduce the quantity of data needed to store the map - in particular, when there are large unoccupied areas in the environment. Storing a reduced amount of data may have the additional benefit that less computational effort is required to update the 3-D occupancy map, when a new frame / 2-D depth image is obtained.

In other embodiments, instead of an occupancy-based representation of 3-D space, the sub-maps may comprise a TSDF-based representation of 3-D space.

The method may further comprise: maintaining a list of currently active sub-maps; and defining a new sub-map if occupancy information derived from a 2-D image and associated depth map extends outside all of the currently active sub-maps.

A new sub-map may be created aligned with a virtual grid that is fixed in a global coordinate system. That is, each new sub-map may be created at a substantially fixed distance and in a substantially fixed orientation relative to other previous newly created sub-maps.

Also provided is a computer program comprising computer program code configured to cause one or more physical computing devices to perform all the steps of a method as summarised above when said computer program is run on the one or more physical computing devices. The computer program may be stored on a computer readable medium, optionally a non-transitory computer readable medium.

Also provided, according to the first aspect, is a mobile device configured to update a 3-D map of a 3-D environment, the 3-D map comprising a plurality of voxels, wherein at least some voxels comprise a semantic class label,

the 3-D map further comprising a segment database storing, for each of a plurality of segments, a segment ID, 3-D spatial information of the segment, and a semantic class label for the segment,
the mobile device comprising a memory, for storing the 3-D map, and one or more processors, configured to:

retrieve the 3-D map from the memory;
obtain a 2-D image of the 3-D environment, and an associated depth map, each comprising a plurality of pixels;
obtain a pose associated with the 2-D image and the depth map;
project the segments into the 2-D image, based on the 3-D spatial information of each segment and the pose, and associate the pixels with respective segments, to generate a class label image containing semantic class labels and a segment ID image containing segment IDs;
perform geometric segmentation of the depth map, wherein the geometric segmentation is based on the segment ID image and determines an updated segment ID image;
perform semantic or panoptic segmentation of the 2-D image, wherein the segmentation is based on the class label image and determines an updated semantic class label for each segment in the updated segment ID image;
update the segment IDs of one or more segments based on the updated segment ID image;
update the semantic class labels of one or more segments, based on the updated semantic class labels; and
update the semantic class labels of one or more voxels based on the updated semantic class labels.
Also provided according to the second aspect is a mobile device configured to update a 3-D map of a 3-D environment, the 3-D map comprising a plurality of voxels, wherein each voxel comprises a segment ID, and at least some voxels further comprise a semantic class label,
wherein the segment ID identifies a segment to which the voxel belongs, wherein each segment comprises a group of one or more voxels having the same semantic class label,
the 3-D map further comprising a segment database storing, for each segment, the respective segment ID and a semantic class label for the segment,
the mobile device comprising a memory, for storing the 3-D map, and one or more processors, configured to:

retrieve the 3-D map from the memory;
obtain a 2-D image of the 3-D environment, and an associated depth map, each comprising a plurality of pixels;
obtain a pose associated with the 2-D image and the depth map;

sample the 3-D map at the 3-D points corresponding to the plurality of pixels, based on the depth map and the pose, to generate a class label image containing semantic class labels and a segment ID image containing segment IDs;

perform geometric segmentation of the depth map, wherein the geometric segmentation is based on the segment ID image and determines an updated segment ID image;

perform semantic or panoptic segmentation of the 2-D image, wherein the segmentation is based on the class label image and determines an updated semantic class label for each segment in the updated segment ID image;

update the segment IDs of one or more voxels based on the updated segment ID image;

update the semantic class labels of one or more segments in the segment database, based on the updated semantic class labels; and

update the semantic class labels of one or more voxels based on the updated semantic class labels.

The mobile device may further comprise a camera configured to obtain the 2-D image. The mobile device may further comprise a second camera configured to obtain a second 2-D image, and the one or more processors may be configured to generate the depth map from the 2-D image and the second 2-D image, based on stereo disparity and/or active stereo matching.

Alternatively, the mobile device may further comprise a depth sensor, configured to capture the depth map.

The mobile device may further comprise an inertial measurement unit, configured to produce inertial measurements, wherein the pose is obtained at least in part based on the inertial measurements. The inertial measurements may form part of the input to a visual-inertial SLAM algorithm, running on the one or more processors, which estimates the pose.

The mobile device may be comprised in a handheld device, robot, or a vehicle. The vehicle may be an unmanned and/or autonomous vehicle. The vehicle may be a land vehicle, an aerial vehicle, a marine vehicle or a submarine vehicle.

Also provided is a mobile device configured to implement a method as summarized above.

BRIEF DESCRIPTION OF THE DRAWINGS

The invention will now be described by way of example with reference to the accompanying drawings, in which:

Figs. 1A-1C show a conceptual representation of a 3-D occupancy map according to an example;
Fig. 2 is a block diagram of a mobile device according to an example;
Fig. 3 is a high-level flowchart illustrating a method of incrementally updating a 3-D map, according to an example;
Fig. 4 is a more detailed flowchart illustrating a method of incrementally updating a 3-D map, according to an example;
Fig. 5 is a flowchart illustrating a method of incrementally updating a 3-D map, according to another example;
Fig. 6 is a flowchart illustrating an exemplary method of associating pixels with segments, suitable for the method of Fig. 5; and
Fig. 7 is a flowchart illustrating part of an exemplary method of performing instance extraction, suitable for the method of Fig. 4 or Fig. 5.

It should be noted that these figures are diagrammatic and not drawn to scale. Relative dimensions and proportions of parts of these figures have been shown exaggerated or reduced in size, for the sake of clarity and convenience in the drawings.

DETAILED DESCRIPTION

Examples described herein have been designed with the aim of compatibility with visual-inertial localisation systems, and visual inertial simultaneous localisation and mapping (VI-SLAM) systems. Nevertheless, it should be understood that they can also be used in other contexts, and the scope of the present disclosure is not limited to systems incorporating a visual-inertial localisation or VI-SLAM system.

Visual-inertial systems for simultaneous localisation and mapping (SLAM) are known in the art. These systems combine an inertial measurement unit (IMU) and a camera. The IMU provides one or more of accelerometer, gyroscope and compass measurements; and the camera provides visual input, in the form of a sequence of images. These may be either monocular images, stereo image-pairs, or a set of images from a multi-camera rig.

The mobile device comprising the camera and IMU may be handheld or mounted on a vehicle or robot moving through an environment. The goals of the system are twofold: to localise - that is, estimate the position and orientation (together, the "pose") of the camera - and also to create a map of the environment through which the camera is moving.

An overview of SLAM systems in general can be found in Cadena et al. ("Past, Present, and Future of Simultaneous Localization and Mapping: Toward the Robust-Perception Age," in IEEE Transactions on Robotics, vol.

32, no. 6, pp. 1309-1332, Dec. 2016, doi: 10.1109/TRO.2016.2624754). An overview of VI-SLAM systems, as well as a specific algorithm for VI-SLAM, can be found in Campos et al. (Carlos Campos, Richard Elvira, Juan J. Gómez Rodriguez, José M.M. Montiel and Juan D. Tardós, "ORB-SLAM3: An Accurate Open-Source Library for Visual, Visual-Inertial and Multi-Map SLAM", arXiv:2007.11898v1 [cs.RO], 23 Jul 2020), for example.

VI-SLAM systems attempt to solve an optimisation problem - namely, to establish the pose of the mobile device, given all of the visual and inertial information available. As the number of measurements increases, it becomes possible to refine previous pose estimates. This can arise, in particular, in the context of "loop closure" - when the system recognises that it has returned to a previously visited location. When this happens, the system may refine the pose estimates making up the entire trajectory over the loop, thereby correcting for any drift that had crept in before the loop-closure was detected. However, refinement of pose estimates can also occur at other times. For example, at the end of a mapping session, it may be desirable to perform a global refinement of the entire trajectory, based on all of the information that has been gathered.

The pose estimates provided by a VI-SLAM system are very useful for supporting higher level analysis of the 3-D environment, such as dense volumetric mapping, semantic segmentation, and object instance detection. However, in order to make best use of the pose estimates, the higher level analysis framework should be able to cope with the periodic refinements of historical pose estimates that may be produced by the VI-SLAM system. Examples disclosed herein have been designed with this aim in mind.

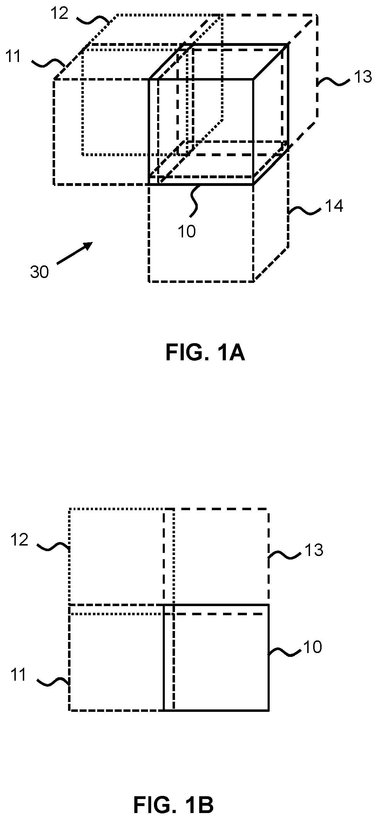

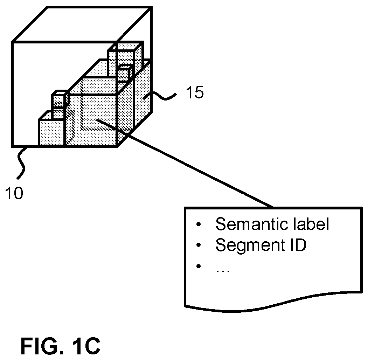

Figs. 1A-1C show a conceptual representation of a 3-D occupancy map according to an example. Fig. 1A is a perspective view. Fig. 1B shows a plan view, looking down on the map from above (in the orientation shown in Fig. 1A). The map 30 comprises a number of sub-maps 10-14. Each sub-map describes the occupancy of a different volumetric region of the 3-D environment to be mapped. Fig. 1C illustrates schematically how one sub-map 10 describes the occupancy of space. The sub-map is divided into a plurality of voxels 15. The voxels densely cover the space - that is, every point in the space falls uniquely within one of the voxels. Each voxel describes the occupancy of its respective portion of the space. A voxel may be occupied, unoccupied, or unknown (not yet mapped). In Fig. 1C, the shaded voxels 15 represent portions of the space that are occupied. Empty (free, unoccupied) and unknown portions of the space are also described by voxels, but these unoccupied/undetermined voxels are not shown explicitly in Fig. 1C, to avoid cluttering this schematic diagram. It should be understood that the sub-maps 11-14 are also divided into voxels which describe the occupancy of space - this is not shown in Figs. 1A-1C, for simplicity and clarity. Each sub-map has an associated pose defining the position and orientation of the relevant volumetric region within the 3-D environment, relative to a global reference coordinate system of the overall occupancy map. Within each sub-map, the occupancy of space may be described rigidly. However, the poses (that is, positions and orientations) of the sub-maps relative to one another can be adjusted by modifying the pose associated with each sub-map.

In this example, the sub-maps are cubes, which overlap at their faces. When they are first instantiated, the cubes are aligned with one another in a regular three-dimensional array. However, as updated pose estimates become available (for example, from a VI-SLAM system), the poses of the sub-maps can be updated. Effectively, the cubes can be shifted and rotated in order to accommodate refinements in the relative pose estimates of the different sub-maps. The overlap between the sub-maps allows this translation and reorientation to be performed without creating unmapped gaps in the overall 3-D occupancy map. The amount of overlap that is desirable depends on the expected magnitude of changes to the poses of the sub-maps. In the present example, an overlap between adjacent cubes of 15% of the volume of each cube was found to produce a good compromise between the desire to avoid gaps and the desire to minimise unnecessary redundancy in the 3-D occupancy map.

Note that, in Figs. 1A-1B, a first sub-map 10 is shown with neighbouring sub-maps 11, 12, 13, and 14 on four sides, for clarity and simplicity; however, in general, each sub-map may be surrounded by neighbours on all six faces as well as twelve neighbouring sub-maps that are diagonally offset and overlap with the first sub-map 10 at one edge (like sub-map 12 in the Fig. 1A). A further eight neighbouring sub-maps may overlap with the first sub-map at its corners.

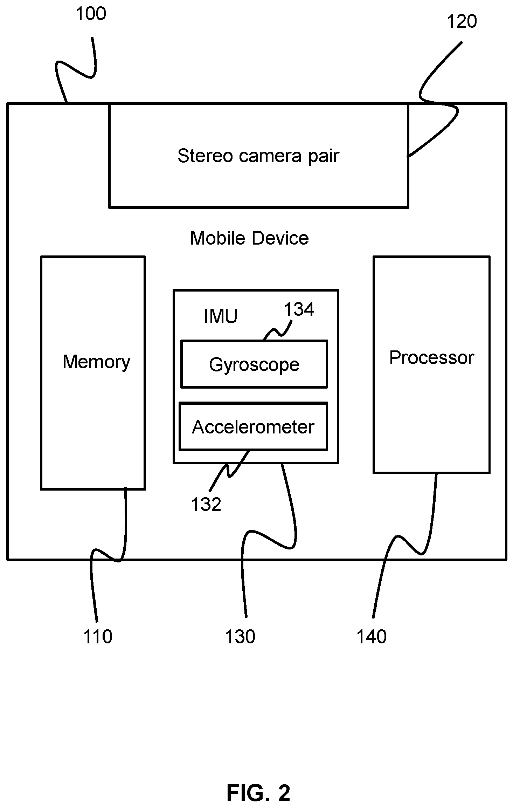

Fig. 2 shows a block diagram of a mobile device 100 according to an example. The mobile device 100 is configured to perform at least two functions. Firstly, it performs simultaneous localisation and mapping (SLAM), using visual and inertial data. This produces frames and associated pose estimates, describing the environment and the trajectory followed by the mobile device 100 during a mapping session. Secondly, the mobile device is configured to create and update a 3-D map of the environment. This map comprises a plurality of voxels (as described above for the example of Figs. 1A- 1C). Each voxel comprises a segment ID and at least some of the voxel's further comprise a semantic class label (as indicated in Fig. 1C). The map also includes a segment database, which stores a semantic class label for each segment and optionally an object instance label for the segment. As will be explained in greater detail below, the segment database also stores, for each segment, the mean and covariance of the 3-D spatial coordinates of the voxels associated with that segment, and the mean and covariance of the surface normals within the segment.

The 3-D map preferably also describes the occupancy of each voxel, as discussed above for Figs. 1A-1C. However, the occupancy mapping is not the focus of the present invention and is optional in this context. It will not be discussed further here. For one recent example of a suitable occupancy mapping method, reference is made to Funk et al. (Funk, N., Tarrio, J., Papatheodorou, S., Popoviá, M., Alcantarilla, P. F., & Leutenegger, S, 2021, Multi-resolution 3D mapping with explicit free space representation for fast and accurate mobile robot motion planning. IEEE Robotics and Automation Letters, 6(2), 3553-3560.

Both the VI-SLAM process and the 3-D mapping process may be performed in parallel, in real-time, while the mobile device is moving around the 3-D environment. The mobile device may be part of a handheld device, a robot, or a vehicle (such as a drone), for example.

As shown in Fig. 2, the mobile device 100 comprises: a memory 110; two cameras, operating as a stereo pair 120; an inertial measurement unit (IMU) 130; and a microprocessor 140. The IMU includes an accelerometer 132 and a gyroscope 134. In some examples, it may further comprise a compass.

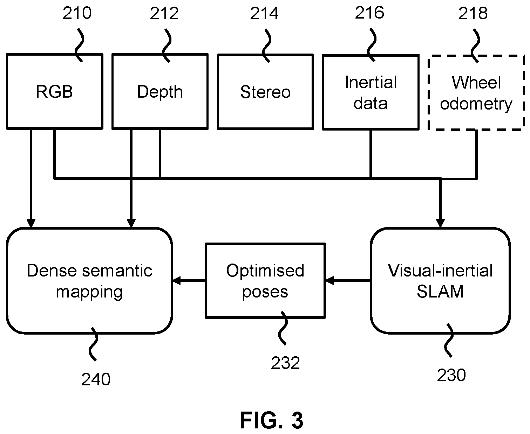

Fig. 3 is a high-level flowchart illustrating a method of incrementally updating a 3-D map, according to an example. The method implements dense semantic mapping 240. The semantic mapping is based on optimised poses 232 produced by a VI-SLAM algorithm 230. The semantic mapping 240 also relies on colour image (RGB) frames 210 and associated depth maps 212, as inputs. The VI-SLAM algorithm 230 produces the optimised poses 232 based on diverse inputs. These inputs include the images 210 and depth maps 212, as well as inertial data 216 produced by the IMU 130. Optionally, if the mobile device 100 is part of a wheeled vehicle or robot, the inputs to the VI-SLAM algorithm may also include wheel odometry data 218. The details of the VI-SLAM algorithm are outside the scope of this disclosure. Any suitable VI-SLAM algorithm may be used, such as the one referenced above by Campos et al.

In the present example, the RGB images 210 are produced by the stereo camera pair 120. The depth maps 212 are produced from respective pairs of stereo images based on active stereo matching 214. Of course, it should be understood that this is not essential - in other examples, the depth maps may be provided by separate, dedicated depth sensors, rather than being inferred from stereo images.

**Exemplary incremental update method**

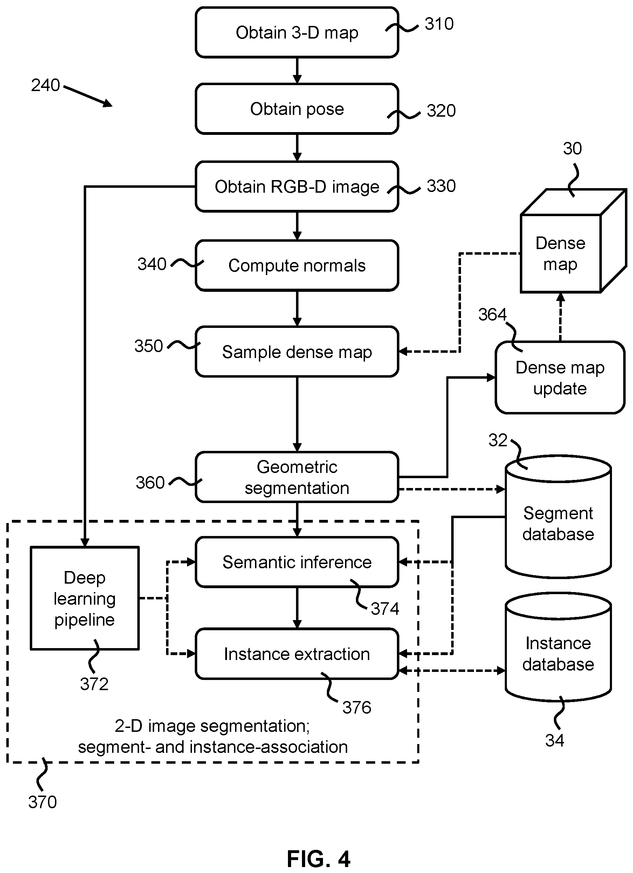

Fig. 4 is a more detailed flowchart illustrating a method of incrementally updating a 3-D map, according to an example. Unless otherwise specified, it should be understood that all the steps of the algorithm are carried out by the processor 140, according to the present example. This is of course non-limiting - the processing may be distributed in a different way in other examples.

An overview of the steps in the dense semantic mapping algorithm 240 first be provided. This will be followed by a more detailed description of each of the steps, where necessary. The aim of the semantic mapping is to decompose the scene into a set of geometric segments, wherein each segment contains voxels of a single class.

In step 310, the processor 140 obtains the current 3-D map 30 by retrieving it from the memory 110. In step 320, the processor obtains a pose estimate from the IMU 130; and in step 330, the processor obtains an RGB + depth (RGB-D) image from the stereo camera pair 120. As mentioned above, the depth map in the RGB-D image is obtained by active stereo matching, in the present example.

In step 340, the processor computes the surface normals from the depth map. In principle, other surface orientation vectors could be used to characterise the surfaces observed in the depth map; however, surface normals are convenient to compute and to work with in the subsequent processing. Suitable methods for surface normal computation are known in the art.

In step 350 the processor reads segment IDs, which are available for some of the RGB-D frame pixels, from the dense map 30. This is done by querying (sampling) the dense map at the 3-D positions corresponding to the pixels of the depth map.

In step 360, the part of the scene visible in the depth frame is segmented geometrically. The segment IDs already present in the depth map are assigned to each pixel of the frame (except those pixels with invalid or discontinuous depth values). The updated segment IDs produced in the geometric segmentation are written into the dense map 30 in an update step 364.

Separately from the geometric segmentation pipeline, the RGB-D frame is processed using a deep learning pipeline 372. This produces a semantic segmentation of the 2-D frame and can optionally additionally provide instance segmentation or object detection results. Using the output of the deep learning pipeline 372, the processor infers a class label for each geometric segment, in semantic inference step 374. This produces an updated semantic class label for each segment produced in the geometric segmentation 360, based on the output of the deep learning pipeline 372 and the semantic class labels previously stored in the dense map 30. The updated semantic class labels are stored in the segment database 32. Finally, in step 376, the processor performs segment-based object instance extraction. The extracted object instances are stored in the instance database 34. Together, steps 372, 374, and 376 can be seen as forming part of an overall 2-D image segmentation algorithm, which segments the latest frame and produces semantic labelling information and object instance information, which can then be stored back in the map 30 (which includes the segment database 32 and the instance database 34). Thus, step 370, which includes the steps 372, 374, and 376, performs 2-D image segmentation as well as segment- and instance-association functions.

Note that both the geometric segmentation of step 360 and the 2-D image segmentation of step 370 are incremental, in that they combine "old" information from the existing dense map 30 with "new" information derived from the current RGB-D frame. In this way, the segmentation of the current frame benefits from the segmentation work already done for previous frames, and is consistent with the existing map. Meanwhile, the map is updated in an efficient and consistent manner. The use of the sub-map structure means that it should not be necessary to update the entire 3-D map if poses are updated in one part of the map - for example, as a result of loop closure detection or bundle adjustment.

During and after the semantic mapping, the map can be queried for a list of object instance bounding boxes for some area or the whole scene. Each bounding box returned by such a query is accompanied by a class label and the object ID. Alternatively, the map can be queried for a particular point in space. The system will return an occupancy status, a semantic class label if the point is occupied, and an instance ID if a semantic class label of the point belongs to a class of countable "things" (rather than a non-countable class of "stuff"). Finally, an annotated mesh of the scene can be requested as well, with semantic class and instance labels.

If a pose of a submap is changed due to bundle adjustment, for example following a loop closure event, the system re-runs the instance extraction step 376. This is a relatively fast step, and it potentially allows the system to merge previously duplicated objects, that actually correspond to a single object instance.

**Alternative exemplary incremental update method**

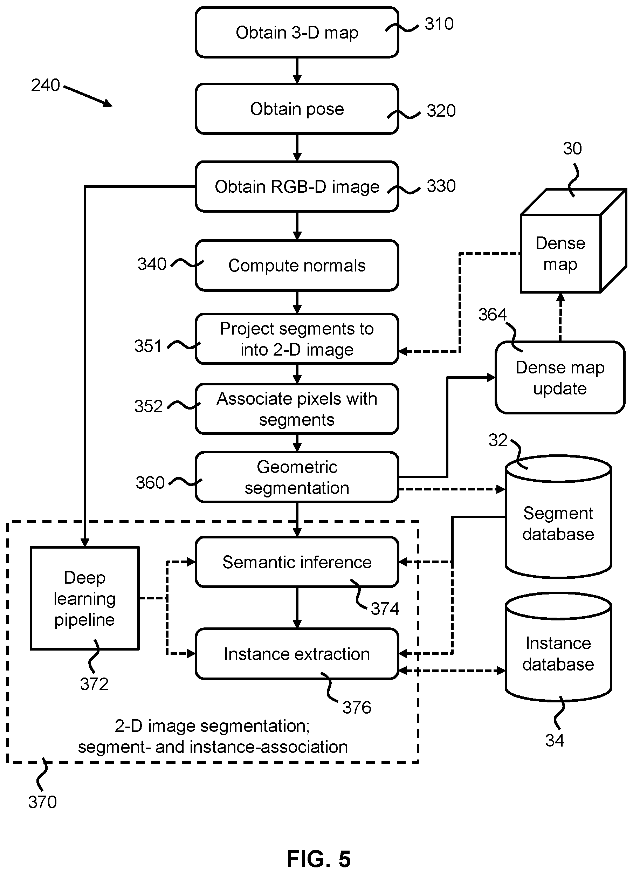

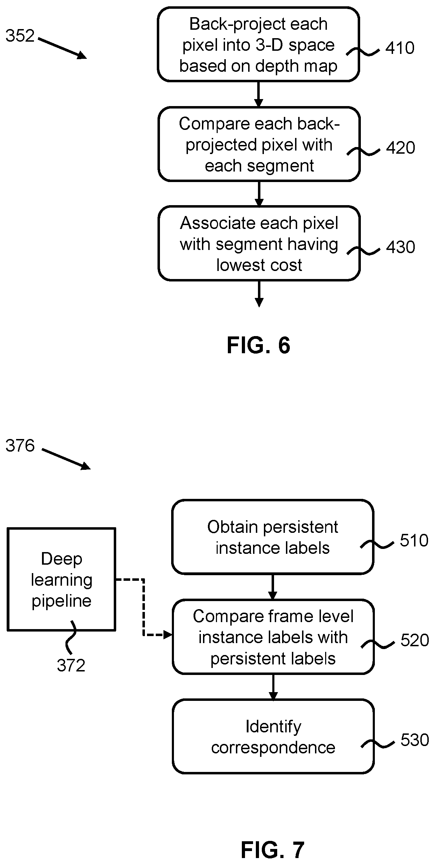

Fig. 5 illustrates an exemplary method of incrementally updating a 3-D map, according to another aspect of the present disclosure. This method differs from the method of Fig. 4 in that the step 350 of sampling the dense map is replaced by two steps 351 and 352. Instead of obtaining the per-pixel segment IDs from the octree structure, in this example they are obtained from the information stored in the segment database 32. As mentioned previously above, the segment database stores the mean position of the segment and a covariance matrix describing the covariance of the position in 3-D space. This representation is less sensitive to the effects of discretisation in the tree structure. Essentially, each segment is represented as an ellipse in 3-D space (defined by the mean and covariance). In order to convert to pixel labels, the 3-D ellipse associated with each segment is first projected into the viewpoint of the 2-D image and depth map (see step 351). For each pixel in the 2-D image and depth map, there may be multiple segments whose projections overlap the pixel. In step 352, each pixel is associated with the segment (whose projection overlaps the pixel) that best matches the pixel. The best match is determined using a cost function. The cost function could be defined in various ways. According to the present example, step 352 is implemented as shown in Fig. 6. In step 410, each pixel in the 2-D image is back-projected into 3-D space based on its respective depth value in the depth map and the camera pose. This provides a point in 3-D space associated with the pixel. The back projected points are then compared with the relevant segments. (For each pixel, the relevant segments are those whose projections in the 2-D image overlapped with the pixel; in other words, they are the segments that intersect the line of sight of the pixel.) The cost function for the comparison takes into account the difference between the 3-D position of the back-projected point and the position of the segment. This position difference is calculated using a Mahalanobis distance, according to the present example; however, other different metrics can also be used. The cost function also takes into account the difference between the normal vector of the segment (based on the 3-D elliptical approximation) and the normal vector associated with the pixel (calculated from the depth map). In step 430, each pixel is associated with the relevant segment for which the cost function returns the lowest value. The lowest value is also compared with a predetermined threshold. If the lowest value is above this predetermined threshold, it is assumed that there is no valid match. In other words, the pixel is associated with a segment that has not yet been seen and therefore is not yet present in the segment database. When this happens, a new segment ID is initialised and stored in the segment database.

Once the pixels have been associated with segments, in step 352, the remainder of the method proceeds as described above for the exemplary method of Fig. 4.

**3-D map**

In the present example, each sub-map represents the occupancy of 3-D space using an octree. The octree structure comprises a hierarchy of nodes, each node being associated with a voxel in the 3-D environment. The octree starts at a root node, which represents the entire cubic volume contained by the current sub-map (for example, the cube 10 in Fig. 1A). At each lower level of the octree, a parent node from the preceding level may be divided into $N_x \times N_y \times N_z$ constituent smaller volumes. Typically, $N_x = N_y = N_z = 2$; thus, each parent node has eight children, corresponding to eight smaller constituent cubes (sub-voxels). The volume continues to be sub-divided at successive levels of the octree, creating a successively finer representation of the occupancy of space. The octree provides a multiresolution representation - large unoccupied parts of the environment can be represented by a small number of large voxels (nodes), while parts of the environment near to a solid object can be described at a finer resolution, with a larger number of smaller voxels (nodes). This allows occupancy to be represented accurately, but efficiently, avoiding a high degree of redundancy. Each leaf node of the octree - that is, each voxel that is not subdivided into eight children - has an occupancy indication associated with it, representing a likelihood that the voxel is occupied or unoccupied.

Note that the term "octree", as used herein, should be understood to include any hierarchical division of parent nodes (voxels) into Nx x Ny x Nz child nodes (child-voxels or sub-voxels). Optionally, Nx = Ny = Nz. Optionally, each of Nx, Ny, and Nz has a value from 1 to 8.

The geometry representation within each sub-map may use a TSDF or occupancy representation. Details of the TSDF representation can be found for example in Newcombe et al. (Newcombe, Richard A, Shahram Izadi, Otmar Hilliges, David Molyneaux, David Kim, Andrew J Davison, Pushmeet Kohi, Jamie Shotton, Steve Hodges, and Andrew Fitzgibbon. 2011. "Kinectfusion: Real-Time Dense Surface Mapping and Tracking." In IEEE and Acm Intl. Sym. on Mixed and Augmented Reality (Ismar), 127-36. IEEE). Details of occupancy-type representations can be found for example in Hornung et al. (Hornung, Armin, Kai M Wurm, Maren Bennewitz, Cyrill Stachniss, and Wolfram Burgard. 2013. "OctoMap: An Efficient Probabilistic 3d Mapping Framework Based on Octrees." Autonomous Robots 34 (3). Springer: 189-206) and Funk et al. (Funk, Nils, Juan Tarrio, Sotiris Papatheodorou, Marija Popović, Pablo F Alcantarilla, and Stefan Leutenegger. 2021. "Multi-Resolution 3d Mapping with Explicit Free Space Representation for Fast and Accurate Mobile Robot Motion Planning." (IEEE) Robotics and Automation Letters 6 (2). IEEE: 3553-60).

### Surface normal computation and map-sampling/readout

For each voxel of a TSDF/occupancy grid, the dense map 30 stores a segment ID. It is zero-initialized. A non-zero value means that the voxel is already associated with some segment. For voxels that are not associated with segments, the map stores a semantic class label and a confidence value.

Separately from the octree, the map also includes a segment database 32 and an instance database 34. According to the present example, the segment database contains a class label and associated confidence value for each segment. According to another example, described later below, the segment database additionally contains a segment ID and 3-D spatial information for each segment. The instance database contains, for each instance, an ID, a class label, a bounding box, and a list of segment IDs belonging to that instance.

One input to the method 240 is an RGB-D sequence. Denote the current RGB-D frame as $I$ and the corresponding pose (that is, the map-to-camera Euclidean transformation) as $\mathbf{R, t}$. We start with computing normals for the depth map $\mathcal{N}$ (step 340). Then, according to the present example, we sample the dense map (step 350) at the points corresponding to the pixels of $I$, transforming them to the map coordinate frame using the pose $\mathbf{R, t}$. If there is a corresponding voxel, then its class label and confidence are stored in the maps $\mathcal{H}$ and $\mathcal{D_H}$, respectively. If the sampled locations are occupied, then the segment ID is stored in a map $\mathcal{J}$. As a result, we obtain three maps $\mathcal{H}, \mathcal{D_H}, \mathcal{J}$ aligned with $I$ containing class labels, confidences and segment IDs.

The map of semantic class labels $\mathcal{H}$ is also referred to herein as a class label image. The map of segment IDs $\mathcal{J}$ is also referred to herein as a segment ID image.

### Rendering-based segment tracking

In an alternative method, outlined above with reference to Fig. 5, we do not keep the segment IDs in the voxel grid. Instead, we store the segment meta-data in a list (in particular, in the segment database 32). When a new RGB-D frame is obtained, we zero-initialize an image-sized array C. We use the RGB-D frame pose to render geometric segments as 3D ellipses defined by spatial covariance matrices. For each pixel u belonging to the image of the segment $\xi$ we compute the cost of pixel-segment association f(u; n; $\xi$), where n denotes a normal in this pixel. We store the minimum among the obtained cost values together with the corresponding segment ID in C. If the minimum cost value exceeds some predetermined threshold $\tau_{track}$, the association is invalidated, and the pixel is considered to belong to a new unobserved surface. We use the following cost:

$$f(\mathbf{u, n}, \xi) = (\mathbf{u} - \bar{p}_\xi)^T \mathbf{P}_\xi^{-1} (\mathbf{u} - \bar{p}_\xi) \chi(|\mathbf{n}^T \bar{n}_\xi| < \tau_{norm}),$$

where $\bar{p}_\xi, P, \bar{n}_\xi$ are the position, spatial covariance and normal, associated with a segment $\xi$, u; n are the position and normal in the pixel, $\tau_{norm}$ is the normal alignment threshold, and $\chi(\cdot)$ returns a value of one if the argument is true and zero otherwise. After the previously seen geometry is associated with segment IDs from the segment database 32, we proceed with the geometric segmentation step that aims to assign a segment ID to every valid pixel of the depth map.

**Geometric segmentation**

The incremental geometric segmentation (step 360) uses the RGB-D frame $I$, as well as the segment ID map $\mathcal{J}$ from the previous step 350 as input, and produces a map $\overline{\mathcal{J}}$ with updated segment IDs for all valid pixels of $I$. The map $\overline{\mathcal{J}}$ is also referred to herein as an updated segment ID image.

From $I$ we build a weighted undirected graph $(V, E, w)$, where $V$ is a set of vertices, $E$ is a set of edges and w is a function mapping an edge to a non-negative weight.

We start with traversing all the pixels $\mathbf{u}$ of $I$. If $\mathbf{u}$ does not have a segment ID in $\mathcal{J}$, a new vertex is created for it. The new vertex is connected with edges to vertices of its four immediate neighbours, except where there are depth discontinuities, where a depth change between the neighbour pixels is larger than a pre-defined threshold. The edge weights are defined below. If $\mathbf{u}$ has a non-zero segment ID $\mathcal{J}(\mathbf{u})$, only a single vertex is created for all pixels with the same ID $\mathcal{J}(\mathbf{u})$. If its neighbours have different segment IDs or do not have them yet, edges are created for these neighbours as well. Next, we adopt a modified version of the efficient graph segmentation (EGS) algorithm and apply it to the case of incremental over-segmentation of depth frames. The EGS algorithm is described in Felzenszwalb, Pedro F, and Daniel P Huttenlocher. 2004. "Efficient Graph-Based Image Segmentation." Intl. J. of Computer Vision 59 (2). Springer: 167-81. Our application of EGS (see Algorithm 1 below) creates a segment $S[i]$ for each vertex, where $i$ is the vertex index. The edges are sorted by weight in ascending order and examined one by one. If the weight w for the edge $e = (a, b)$, where $a, b$ are vertices, does not exceed the segment-specific thresholds for $S[a]$, $S[b]$, the segments are merged. The functions for segment initialization init, merging merge and computing a threshold get_threshold should be defined.

```
Algorithm 1: Efficient Graph Segmentation
Input  : Array of vertex pairs E, array of weights
          W, both having same length
Output: Array S of per-vertex segment labels
for i ← 1 ... |V| do
    S[i] ← i
    T[i] ← 0
    init(i)
end
F ← sort(E, W)
for i ← 1 ... |F| do
    (e, w) ← F[i]
    (a, b) ← e
    (α, β) ← (S[a], S[b])
    if w < min{T[α], T[β]} then
        merge(α, β)
        S[α] ← β
        T[β] ← get_threshold(β, w)
    end
end
```

For our application, we wish to control the segment size. We find that constraining the variation of the normals inside a segment will make the algorithm less viewpoint-dependent. It will not allow merging the segments when their surface normals differ significantly. Therefore, we proceed with our specification of EGS for the incremental depth frame over-segmentation. As it limits the variation of normals, we call the resulting segments 'quasi-planar'. We use the edge weights:

$$w(e) = \frac{1}{v} \parallel \mathbf{n}(a) - \mathbf{n}(b) \parallel + \frac{1}{\kappa} \parallel \mathbf{p}(a) - \mathbf{p}(b) \parallel + \frac{1}{\psi} \parallel \mathbf{c}(a) - \mathbf{c}(b) \parallel. \quad (1)$$

where $\mathbf{p}(\cdot)$ denotes the spatial position of the vertex, $\mathbf{c}(\cdot)$ denotes the colour of the vertex, and $v$, $\kappa$, and $\psi$ are parameters defining the importance of spatial, normal, and colour distances. We compute the mean and the covariance for positions $\overline{\mathbf{p}}$,

**P** and normals $\bar{\mathbf{n}}$, **N** for each segment incrementally. Each pixel contributes with a weight equal to the squared point depth, reflecting the change of point density with respect to distance from the camera. The proposed method is given in Algorithm 2, where

$$\sigma(\boldsymbol{\Sigma}) = \sqrt{\text{maxdiag}\,\boldsymbol{\Sigma}}, \; f(w_1, w_2) = \frac{w_1}{w_1^2 - w_2}. \quad (2)$$

For segments having multiple vertices, we load size, mean, covariance for positions and normals, $W_1$ and $W_2$ from the Segment database; for single-pixel segments, we initialize the mean with a pixel value and the covariance with a zero matrix, $W_1$ equal to the squared point depth, and $W_2$ as a square of the latter value. After the segmentation, we update the segment database 32, omitting the segments with a surface area less than m$^2$.

---

**Algorithm 2**: EGS specification for bounded quasi-planar segments, $\sigma(\cdot)$ and $f(\cdot, \cdot)$ are defined in (2).

---

**Function** mean_cov $(\mu, \boldsymbol{\Sigma}, W_1, W_2, \alpha, \beta)$:
  $w_1 \leftarrow W_1[\beta] + W_1[\alpha]$
  $w_2 \leftarrow W_2[\beta] + W_2[\alpha]$
  $k \leftarrow W_1[\beta] / (W_1[\beta] + W_1[\alpha])$
  $d\mu = \mu[\beta] - \mu[\alpha]$
  $\mathbf{D} \leftarrow (W_1[\alpha] * k^2 + W_1[\beta] * (1 - k)^2)\, d\mu\, d\mu^T$
  $\mathbf{V}_\alpha \leftarrow f^{-1}(W_1[\alpha], W_2[\alpha]) * \boldsymbol{\Sigma}[\alpha]$
  $\mathbf{V}_\beta \leftarrow f^{-1}(W_1[\beta], W_2[\beta]) * \boldsymbol{\Sigma}[\beta]$
  $\boldsymbol{\Sigma}[\beta] \leftarrow f^{-1}(w_1, w_2)(\mathbf{V}_\alpha + \mathbf{V}_\beta + \mathbf{D})$
  $\mu[\beta] \leftarrow k\mu[\beta] + (1 - k)\mu[\alpha]$
  **return** $\mu, \boldsymbol{\Sigma}$

**Function** merge $(\alpha, \beta)$:
  $\bar{p}, \mathbf{P} \leftarrow$ mean_cov $(\bar{p}, \mathbf{P}, W_1, W_2, \alpha, \beta)$
  $\bar{n}, \mathbf{N} \leftarrow$ mean_cov $(\bar{n}, \mathbf{N}, W_1, W_2, \alpha, \beta)$
  $W_1[\beta] \leftarrow W_1[\beta] + W_1[\alpha]$
  $W_2[\beta] \leftarrow W_2[\beta] + W_2[\alpha]$

**Function** get_threshold $(\beta)$:
  **return** $2 - \nu^{-1}\sigma(\mathbf{N}[\beta]) - \kappa^{-1}\sigma(\mathbf{P}[\beta])$

---

Weight non-negativity implies that the variation of normals inside a segment and the spatial extent of the segment are bounded:

$$\sigma(\mathbf{N}[\beta]) < 4\nu, \; \sigma(\mathbf{P}[\beta]) < 4\kappa. \quad (3)$$

This way, $\nu$ and $\kappa$ allow controlling the variation of normals and spatial positions in a segment.

**Semantic inference**

After the incremental geometric segmentation (step 360), the method updates the semantic annotations, using the segment database (step 374).

We assume that a semantic segmentation of the RGB-D frame $I$ is produced by the deep learning pipeline 372 and stored in a pixel map $O(\mathbf{u}) \in \overline{\mathcal{C}}$, where a set $\overline{\mathcal{C}} = \{\mathcal{C} \cup \{u\}\}$ is formed by a set of semantic class labels $\mathcal{C}$ as well as the 'unknown' label u, $\mathbf{u} \in \mathcal{P}$ is a pixel. The deep learning pipeline 372 also produces per-pixel confidences stored in a map $D_O(\mathbf{u})$. The deep learning pipeline is a deep neural network. It should be understood that this is one example of a suitable machine learning algorithm. Other machine learning algorithms could be used instead.

The deep learning pipeline may be any machine learning algorithm suitable for training to produce the required information. Two examples of neural networks that perform panoptic segmentation are: Bonde et al. (U. Bonde, P. F. Alcantarilla, and S. Leutenegger, "Towards bounding-box free panoptic segmentation," in DAGM German Conference on Pattern Recognition (DAGM), 2020, pp. 316-330) and Xiong et al. (Y. Xiong, R. Liao, H. Zhao, R. Hu, M. Bai, E. Yumer and R. Urtasun. UPSNet: A Unified Panoptic Segmentation Network. In IEEE Conf. on Computer Vision and Pattern Recognition (CVPR), 2019).

In the present deep neural network implementation, we use the activations after softmax as class confidence estimates. Other scores could be used alternatively or in addition. For instance, another suitable class confidence score could use the entropy-based approach of Nakajima et al. (Nakajima, Yoshikatsu, Byeongkeun Kang, Hideo Saito, and Kris Kitani, 2019, "Incremental Class Discovery for Semantic Segmentation with Rgbd Sensing." In Intl. Conf. on Computer Vision (ICCV), 972-81).

The *prior* per-pixel semantic annotations $H(u) \in \overline{\mathcal{C}}$, together with confidences $D_H(u)$ were queried from the dense map earlier (in step 350). We use the *observation* $O(u)$, $D_O(u)$ and the *prior* $H(u)$, $D_H(u)$ to compute the *posterior* maps with semantic annotations and confidences $F(u)$, $D_F(u)$.

The *observation* $O(u)$, produced by the deep learning pipeline 372 is referred to herein as a proposed class label for each pixel. The *prior* per-pixel semantic annotations $H(u) \in \overline{\mathcal{C}}$ are the semantic labels sampled from the map 30, which form the class label image.

We use the *posterior maps* $F(u)$, $D_F(u)$ to infer class labels and confidences for segments and voxels. We set $O(u) \leftarrow u$ if, for example, due to a difference between the fields of view for the RGB and depth cameras, only a depth value of a pixel $u$ is available. We set $H(u) \leftarrow u$ if $u$ corresponds to a previously unobserved point of space.

For each pixel, the confidence can either be a scalar corresponding to the best class label, or a vector of per-class confidences of length $|\mathcal{C}|$. One of the rules given below can be used for computing F(u) and corresponding confidences $D_F(u)$. If either $O(u)$ or $H(u)$ is unknown for $u$, we set $F(u)$ equal to the other (known) value and set $D_F(u)$ accordingly.

Three alternative ways to calculate the per-pixel class labels and confidences are as follows:

**Best probability.** We define $D_O(u)$ as the best class probability predicted by the deep network. The posterior label and confidence for u are calculated as

$$F(\mathbf{u}), D_F(\mathbf{u}) = \begin{cases} O(\mathbf{u}), D_O(\mathbf{u}), & \text{if } D_O(\mathbf{u}) > D_H(\mathbf{u}); \\ H(\mathbf{u}), D_H(\mathbf{u}), & \text{otherwise.} \end{cases} \quad (4)$$

**Probability vector.** We use a vector of class probabilities as a confidence indicator. We update it using the Bayesian probability update:

$$D_F(\mathbf{u}) = \frac{1}{D_H(\mathbf{u}) \cdot D_O(\mathbf{u})} D_H(\mathbf{u}) \odot D_O(\mathbf{u}), \quad (5)$$

where $\cdot$ denotes scalar product and $\odot$ denotes elementwise multiplication of vectors. The class label corresponds to the class with the highest confidence:

$$F(\mathbf{u}) = \underset{l \in \mathcal{C}}{\arg\max} D_F^{(l)}(\mathbf{u}), \quad (6)$$

where $D_F^{(l)}(\mathbf{u})$ (u) is the posterior confidence for a class *l*.

**Counting.** We increase the confidence if the observation confirms the prior, and decrease it otherwise:

$$D_F(\mathbf{u}) = \begin{cases} D_H(\mathbf{u}) + \delta, & H(\mathbf{u}) = O(\mathbf{u}), \\ D_H(\mathbf{u}) - \delta, & H(\mathbf{u}) \neq O(\mathbf{u}) \text{ and } D_H(\mathbf{u}) > \delta, \quad (7) \\ 0, & \text{otherwise,} \end{cases}$$

and the labels are updated accordingly:

$$F(\mathbf{u}) = \begin{cases} H(\mathbf{u}), & H(\mathbf{u}) = O(\mathbf{u}), \\ H(\mathbf{u}), & H(\mathbf{u}) \neq O(\mathbf{u}) \text{ and } D_H(\mathbf{u}) > \delta, \quad (8) \\ u, & \text{otherwise.} \end{cases}$$

The above describes how the method obtains posterior class labels and confidences per pixel. Next, we update the geometric segment class labels and confidences. In the present example, we use a majority vote rule for this, such that the label for the majority of the segment pixels becomes the segment label. The confidence of the segment is the average confidence of the pixels that voted for its label.

The results of step 374 therefore include an updated semantic class label for each segment in the updated segment ID image produced in step 360.

We update the segment database 32 with the new values for the segment class labels and confidences, as well as the mean and covariance of the spatial coordinates and the mean and covariance of the surface normals of each segment. Any segments with a surface area less than $\tau$ m$^2$ are omitted.

We also update the semantic class label and confidence for voxels. Each pixel in the depth map contributes to an update of the occupancy/TSDF values of a set of voxels (defined as those voxels within a predetermined depth range in front of and behind the nominal depth value of the pixel). For the voxels from this set, if the semantic confidence in a pixel exceeds the one in a voxel, the voxel's semantic label and confidence are updated with those of the pixel.

**Object instance extraction**

The segment database 32 contains segments with associated meta-data, including mean and covariance for spatial coordinates and surface normals, a semantic label with confidence, and segment extremal points.

We formulate another EGS specification, intending to merge spatially close segments of the same *things* class into object instances of that class. This is step 376 in Fig. 4.

The EGS algorithm used is more sophisticated than connected-components analysis, for example. However, it is still capable of fast, efficient implementation.

Our task is to define a weighted graph $(S, Q, u)$ for object extraction for each *things* class $c \in C$. The vertex set $S$ contains all segments of class c in the map or its spatial region.

For each segment $s \in S$ we define a spatial neighbourhood of segments

$$\mathbf{R}(s) = \{y \in S: \; y \neq s, \; \| \overline{\mathbf{p}}(y) - \overline{\mathbf{p}}(s) \| \leq \epsilon\}, \quad (9)$$

where $\overline{\mathbf{p}}(\cdot)$ is the mean segment position, and $\varepsilon$ is the neighbourhood threshold. We connect s and its neighbours from R(s) with edges and define the weights as follows:

$$w(e) = [\tfrac{1}{2\gamma} w_{\mathrm{spat}}(a, b) + \tfrac{1}{2\phi} w_{\mathrm{inst}}(a, b)]_+, \quad (10)$$

where *a, b* are the neighbouring segments, $w_{\mathrm{spat}}(a, b)$ and $w_{\mathrm{inst}}(a, b)$ are the spatial and the instance-specific weight components, the parameters $\gamma$ and $\phi$ define scaling of these components, and $[x]_+ = \max(x, 0)$. The spatial weight component $w_{\mathrm{spat}}(a, b)$ is always used, while $w_{\mathrm{inst}}(a, b)$ is optional and used only when instance segmentation or object detection network is available (for example, provided by the deep learning pipeline 372).

We define the spatial weights as

$$w_{\mathrm{spat}}(a, b) = \max_{y \in \{a,b\}} (\overline{\mathbf{p}}(y) - \mathbf{j}(a, b))^T \mathbf{P}^{-1}(y)(\overline{\mathbf{p}}(y) - \mathbf{j}(a, b)), \quad (11)$$

where we use the same notation as in Algorithm 2 above, and

$$\mathbf{j}(a, b) = (\mathbf{P}^{-1}(a) + \mathbf{P}^{-1}(b))^{-1}(\mathbf{P}^{-1}(a)\overline{\mathbf{p}}(a) + \mathbf{P}^{-1}(b)\overline{\mathbf{p}}(b)). \quad (12)$$

The point $\mathbf{j}(a, b)$ is the mode of the joint distribution of two Gaussians $\overline{\mathbf{p}}(a)$, $\mathbf{P}(a)$ and $\overline{\mathbf{p}}(b)$, $\mathbf{P}(b)$; the spatial weight $w_{\mathrm{spat}}(a, b)$ expresses how improbable the point $\mathbf{j}(a, b)$ is for the initial distributions. This covariance-weighted formulation is chosen because our quasi-planar segments do not span equally far across all spatial directions.

The instance weight component $w_{\mathrm{inst}}(a, b)$ definition depends on the set of deep networks we use. There are several possible variants for this component:

**Semantic network.** In this configuration, we run only a semantic network, setting $w_{\mathrm{inst}}(a, b) = 0$ for all *a, b*.
**Panoptic network.** In this case, we run either semantic and instance segmentation networks separately, or a single panoptic network. For each frame *I* we get a map $\mathcal{G}(\mathbf{u})$ with per-pixel frame-level object instance IDs. To assign an instance label $g(s)$ to the segment s, we follow area-based majority voting. We define the "same-instance" probability

$\rho(a, b)$ for the segments $a$ and $b$ as an empirical probability of $a$ and $b$ belonging to the same object instance given that both segments were observed, i.e. both had observed surface area at least $\tau$ m$^2$ in $I$. Among the frames where both segments were observed, we count the frames where $a$ and $b$ were assigned the same instance label:

$$\rho(a, b) = \frac{\#\{g(a) = g(b)\}}{\#\{a, b \text{ observed}\}}, \quad (13)$$

where # denotes a number of frames satisfying the condition. Then

$$w_{\text{inst}}(a, b) = \rho(a, b) - \frac{1}{2}. \quad (14)$$

**Semantic + Object Detection.** In this case we get a list of 2-D object bounding boxes for each *things* class. For each bounding box $b$, we select all segments $s$ belonging to the same class and overlapping with $b$ by more than $o\%$ of their observed area in pixels, and set $g(s) \leftarrow b$. We proceed by computing $\rho(a, b)$ and $w_{\text{inst}}$ as in the previous case, following (13), (14).

Having defined the weights, now we proceed with defining the threshold function for EGS. We use a threshold based on the component size, see Algorithm 3, where $\chi_c$ is the class-specific spatial scaling parameter controlling the allowed object size, and the merge function is the same as in Algorithm 2.

---

**Algorithm 3: EGS specification for object instance extraction, $\sigma(\cdot)$ as before, merge as in Algorithm 2.**

---

**Function** `get_threshold`$(\beta)$:

    | return $1 - \chi_c^{-1}\sigma(\mathbf{P}[\beta])$

---

Running the EGS algorithm defined above merges segments together into object instances. In this way, instance labels can be assigned to segments.

After that, we use either per-object spatial mean and covariance, or the extremal points of the instances to construct per-instance bounding boxes.

We have described how the system assigns object instance IDs to segments, and how we find object instance bounding boxes. To implement the point-based query that was mentioned previously, we sample the dense map. If the corresponding voxel is occupied and belongs to a *things* segment, we return a corresponding instance ID and a class label of a segment. If the voxel is not assigned to a segment, but it has a *things* class label, we try to find an instance of the same class whose bounding box encloses the voxel. If we find such an instance, we return the corresponding instance ID and the voxel class.

### Alternative object instance extraction

An example of object instance extraction according to another aspect of the present disclosure will now be described, with reference to Fig. 7. This can be used in step 376 (in either Fig. 4 or 5).

The segment database 32 contains segments with associated meta-data, including mean and covariance for position and normal, a semantic label with confidence, and segment extremal points.

### *Optional 2D instance processing.*

Optionally, when an instance segmentation or an object detection network is used in the deep learning pipeline 372, for each incoming RGB-D frame we get an array G with per-pixel frame-level 2D instance IDs. A set of persistent labels (for example, permanent labels) is obtained from the processing of preceding 2-D image frames (step 510). In step 520, the frame level 2-D instance IDs are compared with the persistent labels.

More specifically, to assign a frame-level instance label $g_\xi$ to a segment $\xi$, the comparing comprises area-based voting. In the present example, we use a greedy instance association mechanism to assign permanent 2D instance IDs to segments; however, the Hungarian method, or other suitable algorithm, can be used here instead.

In particular, for each pair of frame-level and permanent IDs we compute a vote, which is a number of segments having this ID combination - that is, segments assigned with this frame-level ID, but previously assigned with this permanent ID. Then we sort the pairs by the votes in descending order, and greedily associate permanent and frame-level IDs, if neither of them is associated with any other ID before (see step 530 in Fig. 7). If some frame-level IDs are not associated with any permanent IDs, we allocate new IDs to them. As a result, the frame-level and the permanent 2D instance IDs are in one-to-one correspondence. For every segment, we keep track of all the permanent 2D instance IDs associated with it, together with the number of times this association was made (that is, the number of frames for which the association was made). The segment is then associated with a 2D instance ID that is the one most frequently assigned to this segment.

We also keep track of 2D instances seen together in a single RGB-D frame.

### 3D instance extraction

For each "things" segment, we sample five points: one in its mean position, and four on the boundaries, using the segment's spatial covariance matrix. We find nearest neighbours in this set of 3D points sampled from the segments.

If no 2D instance information is available, we simply merge two segments into one instance if a point of one segment is close enough to a point of another segment, and segments belong to the same semantic class.

If we have the 2D instance information, we do not merge segments that are associated with different 2D instances, and these instances have been seen together in a single RGB-D frame. This helps to prevent incorrectly merging closely located objects, such as chairs standing next to each other.

By iteratively merging segments to instances, we get an assignment mapping each segment to some 3D instance. To associate the instances extracted after the current RGB-D frame and the instances extracted earlier, we use the same greedy instance association mechanism. (But, again, the Hungarian method or another suitable algorithm can be used here instead.)

The foregoing has described a pipeline for the incremental annotation of a dense map with semantic classes and object instance IDs. The pipeline is designed for real-time use. It is based on a modification of the EGS algorithm for a particular case of depth map-based incremental geometric scene over-segmentation. The system is designed to be flexible with respect to the deep learning pipeline: it relies on a semantic segmentation network, but instance segmentation or object detection could be used as well, trading off computational resources for additional accuracy.

### Other features

The memory 110 may store one or more computer programs (or software or code) and/or data. The computer programs may include an operating system for the processor 140 to execute in order for the mobile device 100 to function. The computer programs may include computer programs according to embodiments of the invention or computer programs that, when executed by the processor 140, cause the processor 140 to carry out a method according to an embodiment of the invention. The computer programs may be stored in a non-transitory computer-readable storage medium as well as, or instead of, the memory 110.

The processor 140 may be any data processing unit suitable for executing one or more computer readable program instructions, such as those belonging to computer programs stored in the computer-readable storage medium and/or the memory 110. The processor 140 may comprise a single data processing unit or multiple data processing units operating in parallel or in cooperation with each other. The processor 140 may, as part of the execution of one or more computer readable program instructions, store data to and/or read data from the computer-readable storage medium and/or the memory 110.

It should be noted that the above-mentioned embodiments illustrate, rather than limit, the invention, and that those skilled in the art will be able to design many alternative embodiments without departing from the scope of the appended claims.

For example, the stereo camera pair 120 may be replaced by a single camera, or by a multi-camera rig (for example, providing an omnidirectional view of the environment). When a single camera is used, the depth information can be gathered by another depth- and/or ranging-sensor, such as a LiDAR or time-of-flight (ToF) optical sensor.

As mentioned already above, each parent voxel in the octree need not be subdivided into N x N x N =8 child voxels. In particular, the subdivision at the leaf nodes of the octree may use a different number of child voxels. For example, the system may use $N \times N \times N$ voxel blocks at the leaf nodes, with N ranging from 1 to 8. This feature can make the integration run faster; however, this may come at the expense of increased memory use.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to some advantage. Furthermore in the appended claims lists comprising "at least one of: A; B; and C" should be interpreted as (A and/or B) and/or C.

Furthermore in general, the various embodiments may be implemented in hardware or special purpose circuits, software, logic, or any combination thereof. For example, some aspects may be implemented in hardware, while other aspects may be implemented in firmware or software which may be executed by a controller, microprocessor, or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments described herein may be implemented by computer software executable by a data processor of the apparatus, such as in the processor entity, or by hardware, or by a combination of software and hardware. Further in this regard it should be noted that any blocks of the logic flow as in the Figures may represent program steps, or interconnected logic circuits, blocks, and functions, or a combination of program steps and logic circuits, blocks, and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory, and removable memory. The data processors may be of any type suitable to the local technical environment, and may include one or more of general purpose computers, special purpose computers, microprocessors, digital signal processors (DSPs), application-specific integrated circuits (ASIC), gate level circuits, and processors based on multi-core processor architecture, as non-limiting examples.

Embodiments as discussed herein may be practiced in various components such as integrated circuit modules. The design of integrated circuits is largely a highly automated process. Complex and powerful software tools are available for converting a logic level design into a semiconductor circuit design ready to be etched and formed on a semiconductor substrate.

## Claims

1. A computer-implemented method for updating a 3-D map (30) of a 3-D environment, the 3-D map comprising a plurality of voxels, wherein at least some voxels comprise a semantic class label,

   the 3-D map further comprising a segment database (32) storing, for each of a plurality of segments, a segment ID, 3-D spatial information of the segment, and a semantic class label for the segment,
   the method comprising:

   obtaining (310) the 3-D map (30);
   obtaining (330) a 2-D image (210) of the 3-D environment, and an associated depth map (212), each comprising a plurality of pixels;
   obtaining (320) a pose (232) associated with the 2-D image and the depth map;
   projecting (351) the segments into the 2-D image, based on the 3-D spatial information of each segment and the pose, and associating (352) the pixels with respective segments, to generate a class label image containing semantic class labels and a segment ID image containing segment IDs;
   performing geometric segmentation (360) of the depth map, wherein the geometric segmentation is based on the segment ID image and determines an updated segment ID image;
   performing semantic or panoptic segmentation (370) of the 2-D image, wherein the segmentation is based on the class label image and determines an updated semantic class label for each segment in the updated segment ID image;
   updating (364) the segment IDs of one or more segments based on the updated segment ID image;
   updating the semantic class labels of one or more segments, based on the updated semantic class labels; and
   updating the semantic class labels of one or more voxels based on the updated semantic class labels.

2. The method of claim 1, wherein associating the pixels with respective segments comprises, for each pixel:

   comparing (410, 420) the pixel with each segment whose projection overlaps the pixel, using a cost function; and

associating (430) the pixel with the segment for which the cost function has the lowest value.

3. The method of claim 3, wherein the comparing comprises back-projecting (410) the pixel to a point in 3-D space, based on the depth map and comparing (420) the back-projected point with each said segment; and
wherein the cost function is based on one or both of:

a difference between the 3-D position of the back-projected point and the position of the segment; and
a difference between a normal vector of the segment and a normal vector associated with the pixel.

4. A computer-implemented method for updating a 3-D map (30) of a 3-D environment, the 3-D map comprising a plurality of voxels, wherein each voxel comprises a segment ID, and at least some voxels further comprise a semantic class label,

wherein the segment ID identifies a segment to which the voxel belongs, wherein each segment comprises a group of one or more voxels,
the 3-D map further comprising a segment database (32) storing, for each segment, the respective segment ID and a semantic class label for the segment,
the method comprising:

obtaining (310) the 3-D map (30);
obtaining (330) a 2-D image (210) of the 3-D environment, and an associated depth map (212), each comprising a plurality of pixels;
obtaining (320) a pose (232) associated with the 2-D image and the depth map;
sampling (350) the 3-D map (30) at the 3-D points corresponding to the plurality of pixels, based on the depth map and the pose, to generate a class label image containing semantic class labels and a segment ID image containing segment IDs;
performing geometric segmentation (360) of the depth map, wherein the geometric segmentation is based on the segment ID image and determines an updated segment ID image;
performing semantic or panoptic segmentation (370) of the 2-D image, wherein the segmentation is based on the class label image and determines an updated semantic class label for each segment in the updated segment ID image;
updating (364) the segment IDs of one or more voxels based on the updated segment ID image;
updating the semantic class labels of one or more segments in the segment database (32), based on the updated semantic class labels; and
updating the semantic class labels of one or more voxels based on the updated semantic class labels.

5. The method of any one of the preceding claims, wherein the method further comprises processing (340) the depth map to extract surface orientation vectors and the geometric segmentation (360) is based at least in part on the surface orientation vectors.

6. The method of any one of the preceding claims, wherein the geometric segmentation (360) is performed by a graph segmentation algorithm on a weighted graph comprising vertices, and edges connecting the vertices, each edge having an associated weight,
optionally wherein:

for each pixel that does not have a valid segment ID, a vertex is created for that single pixel in the graph;
for pixels that have a valid segment ID, a single vertex is created for all pixels having the same segment ID; and
each vertex is connected to its four immediate neighbours by an edge.

7. The method of any one of the preceding claims, wherein the segmentation of the 2-D image comprises, for each pixel, combining (374) the semantic label from the class label image with the respective proposed class label, to produce an updated pixel class label.

8. The method of any one of the preceding claims, further comprising:

performing instance segmentation (372) of the 2-D image, to produce a frame-level instance label for each pixel;
obtaining (510) a persistent instance label, based on instance segmentation of one or more previous 2-D images;
comparing (520) the frame-level instance labels with the persistent instance labels; and

identifying (530) a correspondence between the frame-level instance labels and the persistent instance labels, based on a result of the comparing.

9. The method of any one of the preceding claims, further comprising performing segment-based object-instance extraction (376),

comprising merging the segments associated with two or more segment IDs into an object instance, based on a similarity metric defined between the segments,

optionally wherein the similarity metric between two segments is based at least in part on one or more of:

the mean position of the two segments;
one or more extremal points of the two segments;
the covariance for the position of the two segments; and
a semantic similarity.

10. The method of claim 9, comprising:

performing instance segmentation (372) of the 2-D image, to produce a frame-level instance label for each pixel; and

when merging segments, prohibiting the merging of any segments that are present in any single 2-D image with different frame-level instance labels.

11. The method of any one of the preceding claims, wherein the 3-D map (30) is a 3-D occupancy map of occupied and unoccupied spaces in the 3-D environment, wherein each voxel comprises an indication of occupancy,

wherein the 3-D occupancy map comprises a plurality of sub-maps (10, 11, 12, 13, 14), each sub-map describing a different volumetric region of the 3-D environment, each sub-map having associated with it a sub-map pose defining a position and orientation of the respective volumetric region within the 3-D occupancy map, optionally wherein the volumetric regions overlap with one another.

12. The method of claim 11, further comprising updating one or more of the sub-map poses, and

responsive to updating the one or more sub-map poses,
performing segment-based object-instance extraction (376),
comprising merging the segments associated with two or more segment IDs into an object instance, based on a similarity metric defined between the segments.

13. A computer program comprising computer program code configured to cause one or more physical computing devices to perform all the steps of the method of any one of the preceding claims when said computer program is run on the one or more physical computing devices.

14. A mobile device (100) configured to update a 3-D map (30) of a 3-D environment, the 3-D map comprising a plurality of voxels, wherein at least some voxels comprise a semantic class label,

the 3-D map further comprising a segment database (32) storing, for each of a plurality of segments, a segment ID, 3-D spatial information of the segment, and a semantic class label for the segment,
the mobile device comprising a memory (110), for storing the 3-D map (30), and one or more processors (140), configured to:

retrieve (310) the 3-D map from the memory;
obtain (330) a 2-D image (210) of the 3-D environment, and an associated depth map (212), each comprising a plurality of pixels;
obtain (320) a pose (232) associated with the 2-D image and the depth map;
project the segments into the 2-D image, based on the 3-D spatial information of each segment and the pose, and associate the pixels with respective segments, to generate a class label image containing semantic class labels and a segment ID image containing segment IDs;
perform geometric segmentation (360) of the depth map, wherein the geometric segmentation is based on the segment ID image and determines an updated segment ID image;

perform semantic or panoptic segmentation (370) of the 2-D image, wherein the segmentation is based on the class label image and determines an updated semantic class label for each segment in the updated segment ID image;

update (364) the segment IDs of one or more segments based on the updated segment ID image;

update the semantic class labels of one or more segments, based on the updated semantic class labels; and

update the semantic class labels of one or more voxels based on the updated semantic class labels.

15. A mobile device (100) configured to update a 3-D map (30) of a 3-D environment, the 3-D map comprising a plurality of voxels, wherein each voxel comprises a segment ID, and at least some voxels further comprise a semantic class label,

wherein the segment ID identifies a segment to which the voxel belongs, wherein each segment comprises a group of one or more voxels having the same semantic class label,

the 3-D map further comprising a segment database (32) storing, for each segment, the respective segment ID and a semantic class label for the segment,

the mobile device comprising a memory (110), for storing the 3-D map (30), and one or more processors (140), configured to:

retrieve (310) the 3-D map from the memory;

obtain (330) a 2-D image (210) of the 3-D environment, and an associated depth map (212), each comprising a plurality of pixels;

obtain (320) a pose (232) associated with the 2-D image and the depth map;

sample (350) the 3-D map at the 3-D points corresponding to the plurality of pixels, based on the depth map and the pose, to generate a class label image containing semantic class labels and a segment ID image containing segment IDs;

perform geometric segmentation (360) of the depth map, wherein the geometric segmentation is based on the segment ID image and determines an updated segment ID image;

perform semantic or panoptic segmentation (370) of the 2-D image, wherein the segmentation is based on the class label image and determines an updated semantic class label for each segment in the updated segment ID image;

update (364) the segment IDs of one or more voxels based on the updated segment ID image;

update the semantic class labels of one or more segments in the segment database (32), based on the updated semantic class labels; and

update the semantic class labels of one or more voxels based on the updated semantic class labels.

**Patentansprüche**

1. Computerimplementiertes Verfahren zum Aktualisieren einer 3D-Karte (30) einer 3D-Umgebung, wobei die 3D-Karte eine Vielzahl von Voxeln umfasst, wobei mindestens einige Voxel eine semantische Klassenbezeichnung umfassen,

wobei die 3D-Karte ferner eine Segmentdatenbank (32) umfasst, die für jedes aus einer Vielzahl von Segmenten eine Segment-ID, 3D-Rauminformationen des Segments und eine semantische Klassenbezeichnung für das Segment speichert,

wobei das Verfahren Folgendes umfasst:

Erhalten (310) der 3D-Karte (30);

Erhalten (330) eines 2D-Bildes (210) der 3D-Umgebung und einer zugehörigen Tiefenkarte (212), die jeweils eine Vielzahl von Pixeln umfassen;

Erhalten (320) einer Pose (232), die dem 2-D-Bild und der Tiefenkarte zugeordnet ist;

Projizieren (351) der Segmente in das 2D-Bild, basierend auf den 3D-Rauminformationen jedes Segments und der Pose, und Zuordnen (352) der Pixel zu jeweiligen Segmenten, um ein Klassenbezeichnungsbild, das semantische Klassenbezeichnungen enthält, und ein Segment-ID-Bild, das Segment-IDs enthält, zu generieren;

Durchführen einer geometrischen Segmentierung (360) der Tiefenkarte, wobei die geometrische Segmentierung auf dem Segment-ID-Bild basiert und ein aktualisiertes Segment-ID-Bild bestimmt;

Durchführen einer semantischen oder panoptischen Segmentierung (370) des 2D-Bilds, wobei die Segmentierung auf dem Klassenbezeichnungsbild basiert und eine aktualisierte semantische Klassenbezeichnung für jedes Segment in dem aktualisierten Segment-ID-Bild bestimmt;

Aktualisieren (364) der Segment-IDs eines oder mehrerer Segmente basierend auf dem aktualisierten Segment-ID-Bild;

Aktualisieren der semantischen Klassenbezeichnungen eines oder mehrerer Segmente, basierend auf den aktualisierten semantischen Klassenbezeichnungen; und

Aktualisieren der semantischen Klassenbezeichnungen eines oder mehrerer Voxeln basierend auf den aktualisierten semantischen Klassenbezeichnungen.

2. Verfahren nach Anspruch 1, wobei das Zuordnen der Pixel zu jeweiligen Segmenten Folgendes für jedes Pixel umfasst:

Vergleichen (410, 420) des Pixels mit jedem Segment, dessen Projektion das Pixel überlappt, unter Verwendung einer Kostenfunktion; und

Zuordnen (430) des Pixels zu dem Segment, für das die Kostenfunktion den niedrigsten Wert aufweist.

3. Verfahren nach Anspruch 3, wobei das Vergleichen das Rückprojizieren (410) des Pixels auf einen Punkt im 3D-Raum, basierend auf der Tiefenkarte und das Vergleichen (420) des rückprojizierten Punkts mit jedem Segment umfasst; und

wobei die Kostenfunktion auf einem oder beiden von folgenden basiert:

einer Differenz zwischen der 3D-Position des rückprojizierten Punkts und der Position des Segments; und

einer Differenz zwischen einem Normalvektor des Segments und einem Normalvektor, der dem Pixel zugeordnet ist.

4. Computerimplementiertes Verfahren zum Aktualisieren einer 3D-Karte (30) einer 3D-Umgebung, wobei die 3D-Karte eine Vielzahl von Voxeln umfasst, wobei jedes Voxel eine Segment-ID umfasst und mindestens einige Voxel ferner eine semantische Klassenbezeichnung umfassen,

wobei die Segment-ID ein Segment identifiziert, zu dem das Voxel gehört, wobei jedes Segment eine Gruppe eines oder mehrerer Voxeln umfasst,

wobei die 3D-Karte ferner eine Segmentdatenbank (32) umfasst, die für jedes Segment die jeweilige Segment-ID und eine semantische Klassenbezeichnung für das Segment speichert,

wobei das Verfahren Folgendes umfasst:

Erhalten (310) der 3D-Karte (30);

Erhalten (330) eines 2D-Bildes (210) der 3D-Umgebung und einer zugehörigen Tiefenkarte (212), die jeweils eine Vielzahl von Pixeln umfassen;

Erhalten (320) einer Pose (232), die dem 2-D-Bild und der Tiefenkarte zugeordnet ist;

Abtasten (350) der 3D-Karte (30) an den 3D-Punkten, die der Vielzahl von Pixeln entsprechen, basierend auf der Tiefenkarte und der Pose, um ein Klassenbezeichnungsbild, das semantische Klassenbezeichnungen enthält, und ein Segment-ID-Bild, das Segment-IDs enthält, zu generieren;

Durchführen einer geometrischen Segmentierung (360) der Tiefenkarte, wobei die geometrische Segmentierung auf dem Segment-ID-Bild basiert und ein aktualisiertes Segment-ID-Bild bestimmt;

Durchführen einer semantischen oder panoptischen Segmentierung (370) des 2D-Bilds, wobei die Segmentierung auf dem Klassenbezeichnungsbild basiert und eine aktualisierte semantische Klassenbezeichnung für jedes Segment in dem aktualisierten Segment-ID-Bild bestimmt;

Aktualisieren (364) der Segment-IDs eines oder mehrerer Voxeln basierend auf dem aktualisierten Segment-ID-Bild;

Aktualisieren der semantischen Klassenbezeichnungen eines oder mehrerer Segmente in der Segmentdatenbank (32), basierend auf den aktualisierten semantischen Klassenbezeichnungen; und

Aktualisieren der semantischen Klassenbezeichnungen eines oder mehrerer Voxeln basierend auf den aktualisierten semantischen Klassenbezeichnungen.

5. Verfahren nach einem der vorhergehenden Ansprüche, wobei das Verfahren ferner das Verarbeiten (340) der Tiefenkarte umfasst, um Oberflächenorientierungsvektoren zu extrahieren, und die geometrische Segmentierung (360) zumindest teilweise auf den Oberflächenorientierungsvektoren basiert.

6. Verfahren nach einem der vorhergehenden Ansprüche, wobei die geometrische Segmentierung (360) durch einen Graphensegmentierungsalgorithmus an einem gewichteten Graph durchgeführt wird, der Scheitelpunkte und Kanten umfasst, die die Scheitelpunkte verbinden, wobei jede Kante eine zugeordnete Gewichtung aufweist, optional wobei:

für jedes Pixel, das keine gültige Segment-ID aufweist, ein Scheitelpunkt für dieses einzelne Pixel in dem Graph erstellt wird;
für Pixel, die eine gültige Segment-ID aufweisen, ein einzelner Scheitelpunkt für alle Pixel mit der gleichen Segment-ID erstellt wird; und
jeder Scheitelpunkt mit seinen vier unmittelbaren Nachbarn durch eine Kante verbunden ist.

7. Verfahren nach einem der vorhergehenden Ansprüche, wobei die Segmentierung des 2-D-Bildes für jedes Pixel das Kombinieren (374) der semantischen Bezeichnung aus dem Klassenbezeichnungsbild mit der jeweiligen vorgeschlagenen Klassenbezeichnung umfasst, um eine aktualisierte Pixelklassenbezeichnung zu generieren.

8. Verfahren nach einem der vorhergehenden Ansprüche, ferner umfassend:

Durchführen einer Instanzsegmentierung (372) des 2D-Bilds, um eine Instanzbezeichnung auf Frame-Ebene für jedes Pixel zu erzeugen;
Erhalten (510) einer dauerhaften Instanzbezeichnung, basierend auf einer Instanzsegmentierung eines oder mehrerer vorheriger 2-D-Bilder;
Vergleichen (520) der Instanzbezeichnungen auf Frame-Ebene mit den dauerhaften Instanzbezeichnungen; und
Identifizieren (530) einer Übereinstimmung zwischen den Instanzbezeichnungen auf Frame-Ebene und den dauerhaften Instanzbezeichnungen, basierend auf einem Ergebnis des Vergleichens.

9. Verfahren nach einem der vorhergehenden Ansprüche, ferner umfassend das Durchführen einer segmentbasierten Objektinstanz-Extraktion (376),
umfassend das Zusammenführen der Segmente, die zwei oder mehr Segment-IDs zugeordnet sind, zu einer Objektinstanz, basierend auf einer Ähnlichkeitsmetrik, die zwischen den Segmenten definiert ist, optional wobei die Ähnlichkeitsmetrik zwischen zwei Segmenten zumindest teilweise auf einem oder mehreren von folgenden basiert:

der mittleren Position der zwei Segmente;
einem oder mehreren Extremalpunkten der zwei Segmente;
der Kovarianz für die Position der zwei Segmente; und
einer semantischen Ähnlichkeit.

10. Verfahren nach Anspruch 9, umfassend:

Durchführen einer Instanzsegmentierung (372) des 2D-Bilds, um eine Instanzbezeichnung auf Rahmenebene für jedes Pixel zu erzeugen; und
Verbieten, beim Zusammenführen von Segmenten, des Zusammenführens von Segmenten, die in einem einzelnen 2D-Bild mit unterschiedlichen Instanzbezeichnungen auf Frame-Ebene vorhanden sind.

11. Verfahren nach einem der vorhergehenden Ansprüche, wobei die 3D-Karte (30) eine 3D-Belegungskarte von belegten und nicht belegten Räumen in der 3D-Umgebung ist, wobei jedes Voxel eine Angabe der Belegung umfasst, wobei die 3D-Belegungskarte eine Vielzahl von Unterkarten (10, 11, 12, 13, 14) umfasst, wobei jede Unterkarte eine unterschiedliche volumetrische Region der 3D-Umgebung beschreibt, wobei jeder Unterkarte eine Unterkartenpose zugeordnet ist, die eine Position und Ausrichtung der jeweiligen volumetrischen Region innerhalb der 3D-Belegungskarte definiert, optional wobei die volumetrischen Regionen miteinander überlappen.

12. Verfahren nach Anspruch 11, ferner umfassend das Aktualisieren einer oder mehrerer der Unterkartenposen, und

als Reaktion auf das Aktualisieren der einen oder mehreren Unterkartenposen,
das Durchführen einer segmentbasierten Objektinstanz-Extraktion (376),
umfassend das Zusammenführen der Segmente, die zwei oder mehr Segment-IDs zugeordnet sind, zu einer Objektinstanz, basierend auf einer Ähnlichkeitsmetrik, die zwischen den Segmenten definiert ist.

13. Computerprogramm, umfassend Computerprogrammcode, der dazu konfiguriert ist, zu bewirken, dass eine oder mehrere physische Rechenvorrichtungen alle Schritte des Verfahrens nach einem der vorhergehenden Ansprüche durchführen, wenn das Computerprogramm auf der einen oder den mehreren physischen Rechenvorrichtungen läuft.

14. Mobile Vorrichtung (100), die dazu konfiguriert ist, eine 3D-Karte (30) einer 3D-Umgebung zu aktualisieren, wobei die 3D-Karte eine Vielzahl von Voxeln umfasst, wobei mindestens einige Voxel eine semantische Klassenbezeichnung umfassen,

wobei die 3D-Karte ferner eine Segmentdatenbank (32) umfasst, die für jedes aus einer Vielzahl von Segmenten eine Segment-ID, 3D-Rauminformationen des Segments und eine semantische Klassenbezeichnung für das Segment speichert,
wobei die mobile Vorrichtung einen Speicher (110) zum Speichern der 3D-Karte (30) und einen oder mehrere Prozessoren (140) umfasst, die konfiguriert sind zum:

Abrufen (310) der 3D-Karte aus dem Speicher;
Erhalten (330) eines 2D-Bildes (210) der 3D-Umgebung und einer zugehörigen Tiefenkarte (212), die jeweils eine Vielzahl von Pixeln umfassen;
Erhalten (320) einer Pose (232), die dem 2-D-Bild und der Tiefenkarte zugeordnet ist;
Projizieren der Segmente in das 2D-Bild, basierend auf den 3D-Rauminformationen jedes Segments und der Pose, und Zuordnen der Pixel zu jeweiligen Segmenten, um ein Klassenbezeichnungsbild, das semantische Klassenbezeichnungen enthält, und ein Segment-ID-Bild, das Segment-IDs enthält, zu generieren;
Durchführen einer geometrischen Segmentierung (360) der Tiefenkarte, wobei die geometrische Segmentierung auf dem Segment-ID-Bild basiert und ein aktualisiertes Segment-ID-Bild bestimmt;
Durchführen einer semantischen oder panoptischen Segmentierung (370) des 2D-Bilds, wobei die Segmentierung auf dem Klassenbezeichnungsbild basiert und eine aktualisierte semantische Klassenbezeichnung für jedes Segment in dem aktualisierten Segment-ID-Bild bestimmt;
Aktualisieren (364) der Segment-IDs eines oder mehrerer Segmente basierend auf dem aktualisierten Segment-ID-Bild;
Aktualisieren der semantischen Klassenbezeichnungen eines oder mehrerer Segmente, basierend auf den aktualisierten semantischen Klassenbezeichnungen; und
Aktualisieren der semantischen Klassenbezeichnungen eines oder mehrerer Voxeln basierend auf den aktualisierten semantischen Klassenbezeichnungen.

15. Mobile Vorrichtung (100), die dazu konfiguriert ist, eine 3D-Karte (30) einer 3D-Umgebung zu aktualisieren, wobei die 3D-Karte eine Vielzahl von Voxeln umfasst, wobei jedes Voxel eine Segment-ID umfasst und mindestens einige Voxel ferner eine semantische Klassenbezeichnung umfassen,

wobei die Segment-ID ein Segment identifiziert, zu dem das Voxel gehört, wobei jedes Segment eine Gruppe eines oder mehrerer Voxeln mit derselben semantischen Klassenbezeichnung umfasst,
wobei die 3D-Karte ferner eine Segmentdatenbank (32) umfasst, die für jedes Segment die jeweilige Segment-ID und eine semantische Klassenbezeichnung für das Segment speichert,
wobei die mobile Vorrichtung einen Speicher (110) zum Speichern der 3D-Karte (30) und einen oder mehrere Prozessoren (140) umfasst, die konfiguriert sind zum:

Abrufen (310) der 3D-Karte aus dem Speicher;
Erhalten (330) eines 2D-Bildes (210) der 3D-Umgebung und einer zugehörigen Tiefenkarte (212), die jeweils eine Vielzahl von Pixeln umfassen;
Erhalten (320) einer Pose (232), die dem 2-D-Bild und der Tiefenkarte zugeordnet ist;
Abtasten (350) der 3D-Karte an den 3D-Punkten, die der Vielzahl von Pixeln entsprechen, basierend auf der Tiefenkarte und der Pose, um ein Klassenbezeichnungsbild, das semantische Klassenbezeichnungen enthält, und ein Segment-ID-Bild, das Segment-IDs enthält, zu generieren;
Durchführen einer geometrischen Segmentierung (360) der Tiefenkarte, wobei die geometrische Segmentierung auf dem Segment-ID-Bild basiert und ein aktualisiertes Segment-ID-Bild bestimmt;
Durchführen einer semantischen oder panoptischen Segmentierung (370) des 2D-Bilds, wobei die Segmentierung auf dem Klassenbezeichnungsbild basiert und eine aktualisierte semantische Klassenbezeichnung für jedes Segment in dem aktualisierten Segment-ID-Bild bestimmt;
Aktualisieren (364) der Segment-IDs eines oder mehrerer Voxeln basierend auf dem aktualisierten Segment-ID-Bild;

Aktualisieren der semantischen Klassenbezeichnungen eines oder mehrerer Segmente in der Segmentdatenbank (32), basierend auf den aktualisierten semantischen Klassenbezeichnungen; und
Aktualisieren der semantischen Klassenbezeichnungen eines oder mehrerer Voxeln basierend auf den aktualisierten semantischen Klassenbezeichnungen.

**Revendications**

1. Procédé mis en œuvre par ordinateur permettant de mettre à jour une carte 3D (30) d'un environnement 3D, la carte 3D comprenant une pluralité de voxels, au moins certains voxels comprenant une étiquette de classe sémantique,

la carte 3D comprenant en outre une base de données de segments (32) stockant, pour chaque segment d'une pluralité de segments, un ID de segment, des informations spatiales 3D du segment et une étiquette de classe sémantique pour le segment,
le procédé comprenant :

l'obtention (310) de la carte 3D (30) ;
l'obtention (330) d'une image 2D (210) de l'environnement 3D et d'une carte de profondeur (212) associée, comprenant chacune une pluralité de pixels ;
l'obtention (320) d'une pose (232) associée à l'image 2D et à la carte de profondeur ;
la projection (351) des segments dans l'image 2D, sur la base des informations spatiales 3D de chaque segment et de la pose, et l'association (352) des pixels à des segments respectifs, afin de générer une image d'étiquette de classe contenant des étiquettes de classe sémantiques et une image d'ID de segment contenant des ID de segment ;
la réalisation d'une segmentation géométrique (360) de la carte de profondeur, ladite segmentation géométrique étant basée sur l'image d'ID de segment et déterminant une image d'ID de segment mise à jour ;
la réalisation d'une segmentation sémantique ou panoptique (370) de l'image 2D, ladite segmentation étant basée sur l'image d'étiquette de classe et déterminant une étiquette de classe sémantique mise à jour pour chaque segment dans l'image d'ID de segment mise à jour ;
la mise à jour (364) des ID de segment d'un ou plusieurs segments, sur la base de l'image d'ID de segment mise à jour ;
la mise à jour des étiquettes de classe sémantique d'un ou plusieurs segments, sur la base des étiquettes de classe sémantique mises à jour ; et
la mise à jour des étiquettes de classe sémantique d'un ou plusieurs voxels, sur la base des étiquettes de classe sémantique mises à jour.

2. Procédé selon la revendication 1, ladite association des pixels à des segments respectifs comprenant, pour chaque pixel :

la comparaison (410, 420) du pixel à chaque segment dont la projection chevauche le pixel, au moyen d'une fonction de coût ; et
l'association (430) du pixel au segment dont la fonction de coût a la valeur la plus faible.

3. Procédé selon la revendication 3, ladite comparaison comprenant la rétroprojection (410) du pixel vers un point dans l'espace 3D, sur la base de la carte de profondeur, et la comparaison (420) du point rétroprojeté à chacun desdits segments ; et
ladite fonction de coût étant basée sur l'une des différences suivantes ou sur les deux :

une différence entre la position 3D du point rétroprojeté et la position du segment ; et
une différence entre un vecteur normal du segment et un vecteur normal associé au pixel.

4. Procédé mis en œuvre par ordinateur permettant de mettre à jour une carte 3D (30) d'un environnement 3D, la carte 3D comprenant une pluralité de voxels, chaque voxel comprenant un ID de segment, et au moins certains voxels comprenant en outre une étiquette de classe sémantique,

ledit ID de segment identifiant un segment auquel le voxel appartient, chaque segment comprenant un groupe d'un ou plusieurs voxels,
la carte 3D comprenant en outre une base de données de segments (32) stockant, pour chaque segment, l'ID de segment respectif et une étiquette de classe sémantique pour le segment,
le procédé comprenant :

l'obtention (310) de la carte 3D (30) ;
l'obtention (330) d'une image 2D (210) de l'environnement 3D et d'une carte de profondeur (212) associée, comprenant chacune une pluralité de pixels ;
l'obtention (320) d'une pose (232) associée à l'image 2D et à la carte de profondeur ;
l'échantillonnage (350) de la carte 3D (30) au niveau des points 3D correspondant à la pluralité de pixels, sur la base de la carte de profondeur et de la pose, afin de générer une image d'étiquette de classe contenant des étiquettes de classe sémantique et une image d'ID de segment contenant des ID de segment ;
la réalisation d'une segmentation géométrique (360) de la carte de profondeur, ladite segmentation géométrique étant basée sur l'image d'ID de segment et déterminant une image d'ID de segment mise à jour ;
la réalisation d'une segmentation sémantique ou panoptique (370) de l'image 2D, ladite segmentation étant basée sur l'image d'étiquette de classe et déterminant une étiquette de classe sémantique mise à jour pour chaque segment dans l'image d'ID de segment mise à jour ;
la mise à jour (364) des ID de segment d'un ou plusieurs voxels, sur la base de l'image d'ID de segment mise à jour ;
la mise à jour des étiquettes de classe sémantique d'un ou plusieurs segments dans la base de données de segments (32), sur la base des étiquettes de classe sémantique mises à jour ; et
la mise à jour des étiquettes de classe sémantique d'un ou plusieurs voxels, sur la base des étiquettes de classe sémantique mises à jour.

5. Procédé selon l'une quelconque des revendications précédentes, ledit procédé comprenant en outre le traitement (340) de la carte de profondeur pour extraire des vecteurs d'orientation de surface, et ladite segmentation géométrique (360) étant basée, au moins en partie, sur les vecteurs d'orientation de surface.

6. Procédé selon l'une quelconque des revendications précédentes, ladite segmentation géométrique (360) étant réalisée par un algorithme de segmentation de graphe sur un graphe pondéré comprenant des sommets et des arêtes reliant les sommets, chaque arête comportant un poids associé, éventuellement :

pour chaque pixel qui n'a pas d'ID de segment valide, un sommet étant créé pour ce pixel unique dans le graphe ;
pour les pixels qui comportent un ID de segment valide, un seul sommet étant créé pour tous les pixels comportant le même ID de segment ; et
chaque sommet étant relié à ses quatre voisins immédiats par une arête.

7. Procédé selon l'une quelconque des revendications précédentes, ladite segmentation de l'image 2D comprenant, pour chaque pixel, la combinaison (374) de l'étiquette sémantique provenant de l'image d'étiquette de classe avec l'étiquette de classe proposée respective, afin de produire une étiquette de classe de pixel mise à jour.

8. Procédé selon l'une quelconque des revendications précédentes, comprenant en outre :

la réalisation d'une segmentation d'instance (372) de l'image 2D, afin de produire une étiquette d'instance de niveau trame pour chaque pixel ;
l'obtention (510) d'une étiquette d'instance persistante, sur la base d'une segmentation d'instance d'une ou plusieurs images 2D précédentes ;
la comparaison (520) des étiquettes d'instance de niveau trame aux étiquettes d'instance persistantes ; et
l'identification (530) d'une correspondance entre les étiquettes d'instance de niveau trame et les étiquettes d'instance persistantes, sur la base d'un résultat de la comparaison.

9. Procédé selon l'une quelconque des revendications précédentes, comprenant en outre la réalisation d'une extraction d'instance d'objet basée sur un segment (376),
ce qui comprend la fusion des segments associés à deux ID de segment ou plus dans une instance d'objet, sur la base d'un indicateur métrique de similarité défini entre les segments, éventuellement ledit indicateur métrique de similarité entre deux segments étant basé, au moins en partie, sur un ou plusieurs des éléments suivants :

la position moyenne des deux segments ;
un ou plusieurs points extrêmes des deux segments ;

la covariance pour la position des deux segments ; et
une similitude sémantique.

**10.** Procédé selon la revendication 9, comprenant :

la réalisation d'une segmentation d'instance (372) de l'image 2D, afin de produire une étiquette d'instance de niveau trame pour chaque pixel ; et
lors de la fusion de segments, l'interdiction de la fusion de segments quelconques qui sont présents dans une seule image 2D quelconque avec des étiquettes d'instance de niveau de niveau trame différentes.

**11.** Procédé selon l'une quelconque des revendications précédentes, ladite carte 3D (30) étant une carte d'occupation 3D d'espaces occupés et inoccupés dans l'environnement 3D, chaque voxel comprenant une indication d'occupation, ladite carte d'occupation 3D comprenant une pluralité de sous-cartes (10, 11, 12, 13, 14), chaque sous-carte décrivant une région volumétrique différente de l'environnement 3D, chaque sous-carte étant associée à une pose de sous-carte définissant une position et une orientation de la région volumétrique respective au sein de la carte d'occupation 3D, éventuellement lesdites régions volumétriques se chevauchant les unes les autres.

**12.** Procédé selon la revendication 11, comprenant en outre la mise à jour d'une ou plusieurs des poses de sous-carte, et

en réponse à la mise à jour de la ou des poses de sous-cartes,
la réalisation d'une extraction d'instance d'objet basée sur un segment (376),
ce qui comprend la fusion des segments associés à deux ID de segment ou plus dans une instance d'objet, sur la base d'un indicateur métrique de similarité défini entre les segments.

**13.** Programme informatique comprenant un code de programme informatique configuré pour amener un ou plusieurs dispositifs informatiques physiques à réaliser toutes les étapes du procédé selon l'une quelconque des revendications précédentes lorsque ledit programme informatique est exécuté sur le ou les dispositifs informatiques physiques.

**14.** Dispositif mobile (100) configuré pour mettre à jour une carte 3D (30) d'un environnement 3D, la carte 3D comprenant une pluralité de voxels, au moins certains voxels comprenant une étiquette de classe sémantique,

la carte 3D comprenant en outre une base de données de segments (32) stockant, pour chaque segment d'une pluralité de segments, un ID de segment, des informations spatiales 3D du segment et une étiquette de classe sémantique pour le segment,
le dispositif mobile comprenant une mémoire (110), permettant de stocker la carte 3D (30), et un ou plusieurs processeurs (140) configurés pour :

récupérer (310) la carte 3D dans la mémoire ;
obtenir (330) une image 2D (210) de l'environnement 3D et une carte de profondeur (212) associée, comprenant chacune une pluralité de pixels ;
obtenir (320) une pose (232) associée à l'image 2D et à la carte de profondeur ;
projeter les segments dans l'image 2D, sur la base des informations spatiales 3D de chaque segment et de la pose, et associer les pixels à des segments respectifs, afin de générer une image d'étiquette de classe contenant des étiquettes de classe sémantiques et une image d'ID de segment contenant des ID de segment ;
réaliser une segmentation géométrique (360) de la carte de profondeur, ladite segmentation géométrique étant basée sur l'image d'ID de segment et déterminant une image d'ID de segment mise à jour ;
réaliser une segmentation sémantique ou panoptique (370) de l'image 2D, ladite segmentation étant basée sur l'image d'étiquette de classe et déterminant une étiquette de classe sémantique mise à jour pour chaque segment dans l'image d'ID de segment mise à jour ;
mettre à jour (364) les ID de segment d'un ou plusieurs segments, sur la base de l'image d'ID de segment mise à jour ;
mettre à jour les étiquettes de classe sémantique d'un ou plusieurs segments, sur la base des étiquettes de classe sémantique mises à jour ; et
mettre à jour les étiquettes de classe sémantique d'un ou plusieurs voxels, sur la base des étiquettes de classe sémantique mises à jour.

**15.** Dispositif mobile (100) configuré pour mettre à jour une carte 3D (30) d'un environnement 3D, la carte 3D comprenant une pluralité de voxels, chaque voxel comprenant un ID de segment, et au moins certains voxels comprenant en outre une étiquette de classe sémantique,

ledit ID de segment identifiant un segment auquel le voxel appartient, chaque segment comprenant un groupe d'un ou plusieurs voxels comportant la même étiquette de classe sémantique,
la carte 3D comprenant en outre une base de données de segments (32) stockant, pour chaque segment, l'ID de segment respectif et une étiquette de classe sémantique pour le segment,
le dispositif mobile comprenant une mémoire (110), permettant de stocker la carte 3D (30), et un ou plusieurs processeurs (140) configurés pour :

récupérer (310) la carte 3D dans la mémoire ;
obtenir (330) une image 2D (210) de l'environnement 3D et une carte de profondeur (212) associée, comprenant chacune une pluralité de pixels ;
obtenir (320) une pose (232) associée à l'image 2D et à la carte de profondeur ;
échantillonner (350) la carte 3D au niveau des points 3D correspondant à la pluralité de pixels, sur la base de la carte de profondeur et de la pose, afin de générer une image d'étiquette de classe contenant des étiquettes de classe sémantique et une image d'ID de segment contenant des ID de segment ;
réaliser une segmentation géométrique (360) de la carte de profondeur, ladite segmentation géométrique étant basée sur l'image d'ID de segment et déterminant une image d'ID de segment mise à jour ;
réaliser une segmentation sémantique ou panoptique (370) de l'image 2D, ladite segmentation étant basée sur l'image d'étiquette de classe et déterminant une étiquette de classe sémantique mise à jour pour chaque segment dans l'image d'ID de segment mise à jour ;
mettre à jour (364) les ID de segment d'un ou plusieurs voxels, sur la base de l'image d'ID de segment mise à jour ;
mettre à jour les étiquettes de classe sémantique d'un ou plusieurs segments dans la base de données de segments (32), sur la base des étiquettes de classe sémantique mises à jour ; et
mettre à jour les étiquettes de classe sémantique d'un ou plusieurs voxels, sur la base des étiquettes de classe sémantique mises à jour.

**FIG. 1A**

**FIG. 1B**

15

10

- Semantic label
- Segment ID
- ...

FIG. 1C

100

120

Stereo camera pair

Mobile Device

Memory

IMU 134

Gyroscope

Accelerometer

Processor

132

110 130 140

**FIG. 2**

210　　　212　　　214　　　216　　　218

| RGB | Depth | Stereo | Inertial data | Wheel odometry |
|---|---|---|---|---|

Dense semantic mapping ← Optimised poses ← Visual-inertial SLAM

240　　　　　　232　　　　　　230

**FIG. 3**

FIG. 4

**FIG. 5**

352 →

```
┌─────────────────────┐
│  Back-project each  │
│ pixel into 3-D space│  ⌇ 410
│  based on depth map │
└─────────────────────┘
           │
           ▼
┌─────────────────────┐
│  Compare each back- │
│  projected pixel with│  ⌇ 420
│    each segment     │
└─────────────────────┘
           │
           ▼
┌─────────────────────┐
│  Associate each pixel│
│ with segment having │  ⌇ 430
│    lowest cost      │
└─────────────────────┘
           │
           ▼
```

**FIG. 6**

376 →

```
┌──────────┐              ┌─────────────────────┐
│   Deep   │              │ Obtain persistent   │
│ learning │              │  instance labels    │  ⌇ 510
│ pipeline │              └─────────────────────┘
│          │                        │
└──────────┘                        ▼
     ⌇              ┌─────────────────────┐
    372      ╌╌╌╌╌► │ Compare frame level │
                    │ instance labels with│  ⌇ 520
                    │  persistent labels  │
                    └─────────────────────┘
                              │
                              ▼
                    ┌─────────────────────┐
                    │      Identify       │
                    │   correspondence    │  ⌇ 530
                    └─────────────────────┘
```

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **TATENO et al.** When 2.5D is not enough: Simultaneous reconstruction, segmentation and recognition on dense SLAM. *2016 IEEE INTERNATIONAL CONFERENCE ON ROBOTICS AND AUTOMATION (ICRA)*
- **CADENA et al.** Past, Present, and Future of Simultaneous Localization and Mapping: Toward the Robust-Perception Age. *IEEE Transactions on Robotics*, December 2016, vol. 32 (6), 1309-1332
- **CAMPOS** ; **CARLOS CAMPOS** ; **RICHARD EL-VIRA** ; **JUAN J.** ; **GÓMEZ RODRIGUEZ** ; **JOSÉ M.M. MONTIEL** ; **JUAN D. TARDÓS et al.** ORB-SLAM3: An Accurate Open-Source Library for Visual, Visual-Inertial and Multi-Map SLAM. *arXiv:2007.11898v1 [cs.RO*, 23 July 2020
- Kinectfusion: Real-Time Dense Surface Mapping and Tracking. **NEWCOMBE** ; **RICHARD A** ; **SHAHRAM IZADI** ; **OTMAR HILLIGES** ; **DAVID MOLYNEAUX** ; **DAVID KIM** ; **ANDREW J DAVISON** ; **PUSHMEET KOHI** ; **JAMIE SHOTTON** ; **STEVE HODGES**. IEEE and Acm Intl. Sym. on Mixed and Augmented Reality (Ismar). IEEE, 2011, 127-36
- **HORNUNG** ; **ARMIN** ; **KAI M WURM** ; **MAREN BENNEWITZ** ; **CYRILL STACHNISS** ; **WOLFRAM BURGARD.** OctoMap: An Efficient Probabilistic 3d Mapping Framework Based on Octrees. *Autonomous Robots*, 2013, vol. 34 (Springer), 189-206
- Efficient Graph-Based Image Segmentation.. **FELZENSZWALB** ; **PEDRO F** ; **DANIEL P HUTTENLOCHER**. Intl. J. of Computer Vision. Springer, 2004, vol. 59, 167-81
- **U. BONDE** ; **P. F. ALCANTARILLA** ; **S. LEUTENEGGER**. Towards bounding-box free panoptic segmentation. *DAGM German Conference on Pattern Recognition (DAGM)*, 2020, 316-330
- **Y. XIONG** ; **R. LIAO** ; **H. ZHAO** ; **R. HU** ; **M. BAI** ; **E. YUMER** ; **R. URTASUN**. UPSNet: A Unified Panoptic Segmentation Network.. *IEEE Conf. on Computer Vision and Pattern Recognition (CVPR)*, 2019
- **NAKAJIMA** ; **YOSHIKATSU** ; **BYEONGKEUN KANG** ; **HIDEO SAITO** ; **KRIS KITANI**. Incremental Class Discovery for Semantic Segmentation with Rgbd Sensing.. *In Intl. Conf. on Computer Vision (ICCV)*, 2019, 972-81